# EUROPÄISCHE PATENTSCHRIFT

(11) **EP 3 234 489 B1**
(45) Veröffentlichungstag und Bekanntmachung des Hinweises auf die Patenterteilung: **08.04.2020**
(21) Anmeldenummer: 15810632.8
(22) Anmeldetag: 16.12.2015
(51) Int. Cl.: F28D 9/00, F28F 9/02, F28D 21/00, F24F 12/00, F24F 7/013

(54) **WÄRMEÜBERTRAGER UND LUFTTECHNISCHES GERÄT DAMIT**
HEAT EXCHANGER AND AIR CONDITIONING APPARATUS THEREWITH
ÉCHANGEUR DE CHALEUR ET APPAREIL DE VENTILATION AVEC UN TEL ÉCHANGEUR DE CHALEUR

(30) Priorität: 18.12.2014 DE 102014019173; 21.04.2015 CH 548152015
(43) Veröffentlichungstag der Anmeldung: 25.10.2017
(73) Patentinhaber: Zehnder Group International AG, 5722 Gränichen (CH)
(72) Erfinder: PAWELZIK, Ole, 78050 Villingen-Schwenningen (DE); BOLLI, Alfred, 78183 Hüfingen (DE)
(74) Vertreter: Dietz, Christopher Friedrich
(86) Internationale Anmeldenummer: PCT/EP2015/079964
(87) Internationale Veröffentlichungsnummer: WO 2016/096965

(56) Entgegenhaltungen:
- EP-A1- 0 933 609
- WO-A2-2013/041066
- DE-A1-102005 035 712
- DE-U1-202010 008 955
- GB-A- 2 439 557
- US-A- 4 343 354
- US-A- 4 799 539
- US-B1- 6 935 416

## Beschreibung

Die Erfindung betrifft einen Wärmeübertrager.

Wärmeübertrager für einen zwischen mindestens zwei Fluiden erfolgenden Wärmeübergang sind bekannt. Beispielsweise werden in Geräten zur Wohnungsbelüftung/Wohnungsklimatisierung Wärmeübertrager für eine Wärmerückgewinnung eingesetzt. Derartige Wärmeübertrager werden von Zuluft/Außenluft und von Abluft durchströmt, wodurch beispielsweise im Winter die Zuluft/Außenluft durch die Wärme der Abluft in ihrer Temperatur erhöht wird. Die bekannten Wärmeübertrager sind im Hinblick auf ihr für den Wärmebereitstellungsgrad aktives Volumen und/oder im Hinblick auf ihre den Wärmeübergang vornehmende Übertragungsfläche verbesserungswürdig.

Aus dem Stand der Technik ist beispielsweise die Druckschrift US 2002/0080633 A1 bekannt, welche einen Wärmeübertrager gemäß dem Oberbegriff des Anspruchs 1 beschreibt, während die Druckschrift GB 2 439 557 A einen Wärmeübertrager gemäß dem Oberbegriff des Anspruchs 2 zeigt.

Der Erfindung liegt daher die Aufgabe zugrunde, einen Wärmeübertrager zu schaffen, der ein in Bezug auf seinen Wärmebereitstellungsgrad besonders günstiges Volumen und/oder eine optimal große Übertagungsfläche für den Wärmeübergang aufweist. Ferner wird ein besonders geringer Schallleistungspegel angestrebt. Von besonderer Bedeutung ist auch der einfache Anschluss von Fluidleitungen und/oder mindestens einer Fluidfördereinrichtung, beispielsweise einem Ventilator. Ferner ist eine kleine Baugröße anzustreben.

Diese Aufgabe wird bei einem Wärmeübertrager für einen zwischen mindestens zwei Fluiden erfolgenden Wärmeübergang in einer ersten Ausführungsform dadurch gelöst, dass er mehrere Wärmeübertragungselemente aufweist, die jeweils mindestens einen Fluidführungsweg für eine Durchleitung von mindestens einem der Fluide aufweist, wobei der Wärmeübertrager eine oder im Wesentlichen eine Zylinderform mit einer Zylinderachse aufweist und die Wärmeübertragungselemente um die Zylinderachse herum zueinander benachbart angeordnet sind, wobei jedes der Wärmeübertragungselemente oder jeweils mindestens ein Bereich von diesen eine Umrissstruktur wie ein oder im Wesentlichen wie ein:
- Dreieckzylinder oder
- Trapezzylinder oder
- Kreisausschnittszylinder oder
- Kreisringausschnittszylinder
aufweist, wobei durch die benachbart zueinander angeordneten Wärmeübertragungselemente der Wärmeübertrager oder mindestens ein Bereich von diesem eine Umrissstruktur wie ein oder im Wesentlichen wie ein:
- Mehreckzylinder oder
- Mehreckhohlzylinder oder
- Kreiszylinder oder
- Kreisringzylinder
aufweist, und wobei jedes Wärmeübertragungselement - in Richtung der Zylinderachse betrachtet - drei Zonen aufweist, nämlich zwei Kreuzstromzonen, zwischen denen eine Gegenstromzone oder eine Gleichstromzone liegt, und jedes Wärmeübertragungselement eine erste Wärmeübertragungswand aufweist, die für dieses Wärmeübertragungselement und für das angrenzende Wärmeübertragungselement eine gemeinsame Wärmeübertragungswand bildet, und zwischen benachbarten ersten Wärmeübertragungswänden mindestens ein Abstandssteg angeordnet ist, der ein Fluidleitsteg ist und der in mindestens einer der Kreuzstromzonen schräg zur Zylinderachse und in der Gegenstromzone oder Gleichstromzone parallel zur Zylinderachse verläuft, wobei der Wärmeübertrager zwei, einander gegenüberliegende Stirnseiten aufweist, die Fluidöffnungen aufweisen. Weiter ist vorgesehen, dass an einer der Stirnseiten die Fluidöffnungen in einer Innenzone Fluideintrittsöffnungen für ein erstes Fluid sind und dass an der anderen Stirnseite die Fluidöffnungen in einer sich um die Innenzone herum erstreckenden Außenzone Fluidaustrittsöffnungen für das erste Fluid sind, und dass an der anderen Stirnseite die Fluidöffnungen in der Innenzone Fluideintrittsöffnungen für ein zweites Fluid sind und dass an der einen Stirnseite die Fluidöffnungen in der Außenzone Fluidaustrittsöffnungen für das zweite Fluid sind.

Durch die Gestaltung der Wärmeübertragungselemente als Dreieckzylinder oder Trapezzylinder oder Kreisausschnittszylinder oder Kreisringausschnittszylinder und ihr benachbartes Anordnen um die Zylinderachse herum, sodass - je nach Zylinderform der Wärmeübertragungselemente ein Mehreckzylinder oder ein Mehreckhohlzylinder oder ein Kreiszylinder oder ein Kreisringzylinder entsteht, wird ein optimales Wärmeübertragungsvolumen und eine optimal große Wärmeübertragungsfläche geschaffen, wobei dennoch eine relativ kleine Baugröße vorliegt. Der für den Wärmeübergang vorgesehenen Raum beziehungsweise die für den Wärmeübergang vorgesehene Wärmeübertragungsfläche ist aufgrund der geometrischen Ausgestaltung der Wärmeübertragungselemente und des gesamten Wärmeübertragers optimiert. Aufgrund der Erfindung wird der Wärmebereitstellungsgrad optimiert. Weist der Wärmeübertrager einen Kreisquerschnitt auf, so ist der Wärmebereitstellungsgrad maximiert. Insbesondere ergibt sich bei einer benachbarten Anordnung von Wärmeübertragungselementen als Dreieckzylinder für den Wärmeübertrager die Umrissstruktur des Mehreckzylinders. Für als Trapezzylinder ausgebildete Wärmeübertragungselemente ergibt sich der Mehreckhohlzylinder, wobei die Mehreckigkeit sowohl auf den Außenmantel als auch auf den Innenmantel bezogen ist. Werden als Wärmeübertragungselemente Kreisausschnittszylinder verwendet, so weist der Wärmeübertrager eine Umrissstruktur wie der Kreiszylinder auf. Da zum Zentrum des Zylinders des Wärmeübertragers hin die einzelnen Wärmeübertragungselemente immer schlanker werden und dort schwierig herstellbar sind und auch nur einen geringen Wirkungsgrad für den Wärmeübergang entfalten, ist es vorteilhaft, die Wärmeübertragungselemente als Kreisringausschnittszylinder auszubilden, sodass der Wärmeübertrager eine Umrissstruktur wie der Kreisringzylinder erhält. Diese letzte Bauform ist besonders bevorzugt.

Die verschiedenen Zylinderarten der Umrissstruktur des Wärmeübertragers sind bevorzugt als gerade Zylinder ausgebildet. Alternativ ist die Ausbildung als schiefe Zylinder möglich. Dies bedeutet bei geraden Zylindern, dass rechtwinklig zur Zylinderachse Stirnseiten verlaufen, wovon die eine auch als Grundseite und die andere als Deckseite bezeichnet werden kann.

Bei dem erfindungsgemäßen Wärmeübertrager ist insbesondere und vorteilhafter Weise vorgesehen, dass die Zuführung und die Abführung der mindestens zwei Fluide an den genannten Stirnseiten des Wärmeübertragers, also an den Stirnseiten des Mehreckzylinders oder den Stirnseiten des Mehreckhohlzylinders oder den Stirnseiten des Kreiszylinders oder den Stirnseiten des Kreisringzylinders erfolgt. Insbesondere wird eines der Fluide einem Bereich einer Stirnseite zugeführt, durchsetzt dann den Wärmeübertrager und wird an einem Bereich der anderen Stirnseite abgeführt. Das andere der Fluide wird einem Bereich der anderen Stirnseite zugeführt, durchsetzt dann den Wärmeübertrager und wird an einem Bereich der einen Stirnseite abgeführt.

Durch das Durchströmen des Wärmeübertragers erfolgt zwischen den beiden Fluiden der Wärmeübergang. Die beiden Fluide sind dabei strömungstechnisch voneinander getrennt, d.h., es erfolgt keine Durchmischung. Bei den Fluiden handelt es sich vorzugsweise um gasförmige Fluide, insbesondere um Luft.

Diese Aufgabe wird ferner in einer zweiten Ausführungsform gelöst durch einen Wärmeübertrager für einen zwischen mindestens zwei Fluiden erfolgenden Wärmeübergang, mit mehreren Wärmeübertragungselementen, die jeweils mindestens einen Fluidführungsweg für eine Durchleitung von mindestens einem der Fluide aufweisen, wobei der Wärmeübertrager eine oder im Wesentlichen eine Kegelstumpfform mit einer Kegelstumpfachse aufweist und die Wärmeübertragungselemente um die Kegelstumpfachse herum zueinander benachbart angeordnet sind, wobei jedes der Wärmeübertragungselemente oder jeweils mindestens ein Bereich von diesen eine Umrissstruktur wie ein oder im Wesentlichen wie ein:
- Dreieckkegelstumpf oder
- Trapezkegelstumpf oder
- Kreisausschnittskegelstumpf oder
- Kreisringausschnittskegelstumpf
aufweist, wobei durch die benachbart zueinander angeordneten Wärmeübertragungselemente der Wärmeübertrager oder mindestens ein Bereich von diesem eine Umrissstruktur wie ein oder im Wesentlichen wie ein:
- Mehreckkegelstumpf oder
- Mehreckhohlkegelstumpf oder
- Kreiskegelstumpf oder
- Kreisringkegelstumpf
aufweist, und wobei jedes Wärmeübertragungselement - in Richtung der Kegelstumpfachse betrachtet - drei Zonen aufweist, nämlich zwei Kreuzstromzonen, zwischen denen eine Gegenstromzone oder eine Gleichstromzone liegt, und jedes Wärmeübertragungselement eine erste Wärmeübertragungswand aufweist, die für dieses Wärmeübertragungselement und für das angrenzende Wärmeübertragungselement eine gemeinsame Wärmeübertragungswand bildet, und zwischen benachbarten ersten Wärmeübertragungswänden mindestens ein Abstandssteg angeordnet ist, der ein Fluidleitsteg ist und der in mindestens einer der Kreuzstromzonen schräg zur Kegelstumpfachse und in der Gegenstromzone oder Gleichstromzone parallel zur Kegelstumpfachse verläuft. Es gelten die vorstehend zum zylindrischen Wärmeübertrager genannten Ausführungen in entsprechender Weise. Gegenüber dem erstgenannten, zylindrischen Wärmeübertrager weist der hier vorliegende Wärmeübertrager - entlang der Kegelstumpfachse gesehen - eine Kegelstumpfform beziehungsweise etwa eine Kegelstumpfform seiner Umrissstruktur auf, sodass sich die entsprechenden, vorstehend genannten Kegelstümpfe ergeben. Für die einzelnen Wärmeübertragungselemente, die um die Kegelstumpfachse herum zueinander benachbart angeordnet sind, ergibt sich dann - je nach Ausführungsform - die entsprechende, vorstehend genannte Kegelstumpfform.

Allen Wärmeübertragungselementen sowohl in der Zylindervariante als auch in der Kegelstumpfvariante ist gemeinsam, dass sie keilförmig gestaltet sind.

Nach einer Weiterbildung der Erfindung ist vorgesehen, dass die Zylinderachse eine Zylindermittelachse ist. Insbesondere ist der Wärmeübertrager diametral zur Zylindermittelachse gleichartig beziehungsweise rotationssymmetrisch aufgebaut.

Ferner ist es vorteilhaft, wenn jedes Wärmeübertragungselement nur einen Fluidführungsweg für eine Durchleitung von nur einem der Fluide aufweist. Insbesondere ist dabei vorgesehen, dass ein an das vorstehend genannte Wärmeübertragungselement angrenzendes Wärmeübertragungselement ebenfalls nur einen Fluidführungsweg für eine Durchleitung von nur einem der Fluide aufweist, wobei dieses Fluid ein anderes Fluid ist, sodass zwischen den beiden benachbarten Wärmeübertragungselementen ein Wärmeübergang zwischen den Fluiden stattfinden kann.

Gemäß der Erfindung ist vorgesehen, dass jedes Wärmeübertragungselement - in Richtung der Zylinderachse oder der Kegelstumpfachse betrachtet - drei Zonen aufweist, nämlich zwei Kreuzstromzonen, zwischen denen eine Gegenstromzone oder eine Gleichstromzone liegt.

Zusätzlich kann vorgesehen sein, dass der Wärmeübertrager und/oder jeder Fluidführungsweg - in Richtung der Zylinderachse oder der Kegelstumpfachse betrachtet - die drei Zonen aufweist, nämlich die zwei Kreuzstromzonen, zwischen denen die Gegenstromzone oder die Gleichstromzone liegt. Betrachtet man zwei Fluide, von denen eines der einen Stirnseite des Wärmeübertragers zugeführt wird und das andere der anderen Stirnseite, so ergibt sich innerhalb des Wärmeübertragers eine Fluidführung derart, dass nach dem Eintritt des einen Fluids in den Wärmeübertrager zunächst eine Kreuzstromzone durchströmt wird, d.h., dort erfolgt ein Wärmeübergang mit dem anderen Fluid derart, dass sich die beiden Fluidströme kreuzen. Anschließend wird die Gegenstromzone passiert, d.h., in dieser Zone strömen sich die beiden Fluide diametral entgegen. Daran schließt sich die weitere Kreuzstromzone an, in der sich wiederum die beiden Fluidströme kreuzen, also Richtungen aufweisen, die einem Kreuz entsprechen. Die Fluidströme sind jedoch stets durch einer Wärmeübertragungswand voneinander getrennt. Insbesondere ist vorgesehen, dass die Gegenstromzone oder Gleichstromzone länger als die jeweilige Kreuzstromzone ist, insbesondere ist die Gegenstromzone oder Gleichstromzone dreimal, vorzugsweise viermal, insbesondere größer als viermal länger als die Länge einer Kreuzstromzone (jeweils in Richtung der Zylinderachse beziehungsweise Kegelstumpfachse betrachtet). Anstelle der Gegenstromzone kann auch die erwähnte Gleichstromzone ausgebildet sein, das heißt, die beiden Fluidströme strömen in dieser Zone in gleichen Richtungen. Dies setzt voraus, dass die beiden Fluide der gleichen Stirnseite des Wärmeübertragers zugeführt und von der gleichen Stirnseite des Wärmeübertragers abgeführt werden. Nachstehend sind jedoch auch Ausführungsbeispiele vorhanden, bei denen die Zuführung und/oder Abführung nicht oder nicht nur an der Stirnseite beziehungsweise den Stirnseiten des Wärmeübertragers erfolgt, sondern gegebenenfalls erfolgt eine Zuführung beziehungsweise Abführung im Bereich oder zusätzlich auch im Bereich eines Außenmantels und/oder Innenmantels des Wärmeübertragers. Es gelten dann die vorstehenden Erläuterungen entsprechend.

Eine Weiterbildung der Erfindung sieht vor, dass der Fluidführungsweg der Gegenstromzone oder der Gleichstromzone parallel zur Zylinderachse verläuft.

Eine Weiterbildung der Erfindung sieht vor, dass der Fluidführungsweg der Gegenstromzone oder der Gleichstromzone parallel oder etwa parallel zur Kegelstumpfachse verläuft.

Ferner ist es vorteilhaft, wenn der Fluidführungsweg von mindestens einer der Kreuzstromzonen schräg zur Zylinderachse oder Kegelstumpfachse verläuft.

Gemäß der Erfindung ist vorgesehen, dass jedes Wärmeübertragungselement eine erste Wärmeübertragungswand aufweist, die für dieses Wärmeübertragungselement und für das angrenzende Wärmeübertragungselement eine gemeinsame Wärmeübertragungswand bildet. Durch das benachbarte Anordnen der Wärmeübertragungselemente um die Zylinderachse herum wird demgemäß zwischen den Fluidführungswegen der beiden Wärmeübertragungselemente die Wärmeübertragungswand angeordnet, wobei diese eine gemeinsame Wärmeübertragungswand ist.

Nach einer Ausgestaltung der Erfindung ist vorgesehen, dass jedes Wärmeübertragungselement einen ersten und einen zweiten Fluidführungsweg für eine jeweilige Durchleitung von einem der Fluide aufweist. Dies bedeutet, dass das Wärmeübertragungselement quasi aus zwei Einzelelementen besteht, die relativ zueinander strömungstechnisch abgegrenzt sind und die jeweils einen Fluidführungsweg aufweisen, sodass die Fluidführungswege von zwei Fluiden durchströmt werden können, was vorzugsweise zumindest bereichsweise gegenläufig erfolgt.

Nach einer Weiterbildung der Erfindung ist vorgesehen, dass jedes Wärmeübertragungselement eine zweite Wärmeübertragungswand aufweist, die den ersten und den zweiten Fluidführungsweg in diesem Wärmeübertragungselement voneinander trennt. Diese Ausgestaltung ist insbesondere bei dem Wärmeübertragungselement mit den beiden Fluidführungswegen vorgesehen.

Eine Weiterbildung der Erfindung sieht vor, dass die zweite Wärmeübertragungswand derart ausgebildet ist, dass sie an sie angrenzende erste Wärmetauschwände zueinander auf Abstand hält. Die zweite Wärmeübertragungswand hat somit eine Doppelfunktion, indem sie einerseits die beiden Fluide voneinander trennt und ferner als Abstandshalter für erste Wärmetauschwände dient, die an sie angrenzen. Insbesondere kann dabei vorgesehen sein, dass die zweite Wärmeübertragungswand zumindest abschnittsweise einen unebenen, insbesondere zickzackförmigen, wellenförmigen und/oder meanderförmigen Verlauf aufweist. Aufgrund dieses genannten Verlaufs der zweiten Wärmeübertragungswand kann sie ihre Trennfunktion und auch ihre Funktion als Abstandshalter besonders gut erfüllen. Weist die zweite Wärmeübertragungswand beispielsweise einen zickzackförmigen Verlauf auf, so kann gegen die Zacken auf der einen Seite eine erste Wärmeübertragungswand und gegen die Zacken auf der anderen Seite eine weitere erste Wärmeübertragungswand anliegen. Damit werden die beiden ersten Wärmetauschwände auf Abstand gehalten und die durch den Zickzackverlauf entstandenen Hohlräume dienen der Durchleitung der beiden Fluide und natürlich deren strömungstechnisches Separieren.

Nach einer Weiterbildung der Erfindung ist vorgesehen, dass sich die ersten und/oder die zweite Wärmeübertragungswand von einer Außenseite/einem Außenmantel des Wärmeübertragers bis zu einer Innenseite/einem Innenmantel oder einem Zentrum/einer Zylinderachse/einer Kegelstumpfachse des Wärmeübertragers erstreckt. Die Wärmeübertragungswände verlaufen daher von der Außenseite, also von dem Außenmantel des Wärmeübertragers, bis zu der Innenseite, beispielsweise der Innenmantel bei einem Hohlzylinder, oder bis in das Zentrum (insbesondere bis zur Zylinderachse/Kegelstumpfachse) des Wärmeübertragers hinein, wenn kein Hohlzylinder/Hohlkegelstumpf vorliegt.

Die Erfindung sieht vor, dass zwischen benachbarten ersten Wärmeübertragungswänden mindestens ein Abstandssteg angeordnet ist. Zusätzlich kann vorgesehen sein, dass der mindestens eine Abstandssteg zwischen benachbarten ersten und zweiten Wärmeübertragungswänden angeordnet ist. Insbesondere dann, wenn die ersten und/oder zweiten Wärmeübertragungswände aus sehr dünnem Material bestehen und/oder keine hinreichende Eigensteifigkeit besitzen, wirkt der mindestens eine Abstandssteg stabilisierend auf diese Wärmeübertragungswände. Die ersten und/oder zweiten Wärmeübertragungswände können eine Diffusion zulassen. In einem solchen Falle ist ein derartiger Wärmeübertrager als Enthalpie zu bezeichnen. Sofern die genannten Wärmeübertragungswände diffusionsdicht ausgebildet sind, spricht man von einem sensiblen Wärmeübertrager.

Es ist erfindungsgemäß vorgesehen, dass der mindestens eine Abstandssteg ein Fluidleitsteg ist. Ihm kommt daher eine Doppelfunktion zu, indem er einerseits die ersten und/oder zweiten Wärmeübertragungswände im Abstand zueinander hält und auch stabilisiert sowie andererseits überdies eine Strömungsleitfunktion von mindestens einem Fluid vornimmt. Ein derartiger Abstandssteg kann vorzugsweise einen Fluidführungsweg in Längserstreckung durchsetzen und hält die entsprechende Wärmeübertragungswände, teilt dabei jedoch den Fluidführungsweg zumindest abschnittsweise in zwei Teilbereiche (Teilfluidströmungswege entlang seiner Längserstreckung). Natürlich können auch mehrere Fluidleitstege innerhalb eines Fluidführungsweges liegen, sodass eine mehrkanalige Strömungsstruktur entsteht. Ein derartiger Fluidleitsteg kann auch den Fluidführungsweg beranden/begrenzen.

Eine Weiterbildung der Erfindung sieht vor, dass die erste und/oder die zweite Wärmeübertragungswand fluidselektiv durchlässig, insbesondere diffusionsoffen, ausgebildet ist. Vorzugsweise ist es möglich, dass zumindest eine der genannten Wärmetauschwände für Wasserdampf durchlässig sind, nicht jedoch für Luft. Man spricht dann auch von einem Wärmetauscher beziehungsweise Wärmeübertrager als Enthalpie. Bei einer solchen Ausgestaltung kann eine Feuchterückgewinnung erfolgen. Während des Betriebes kann sich je nach den Umgebungsparametern Feuchtigkeit im Wärmeübertrager bilden, die die erste und/oder zweite Wärmeübertragungswand durchdringen kann und somit beispielsweise aufgefangen werden kann. Alternativ ist es jedoch auch denkbar, den Wärmeübertrager als sogenannten sensiblen Wärmeübertrager auszubilden, bei dem die erste und/oder die zweite Wärmeübertragungswand diffusionsdicht ausgebildet ist.

Bei der ersten Ausführungsform der Erfindung und optional bei der zweiten Ausführungsform ist vorgesehen, dass der Wärmeübertrager zwei, einander gegenüberliegende Stirnseiten aufweist, die Fluidöffnungen, insbesondere Fluideintritts- und Fluidaustrittsöffnungen, aufweisen. Wie eingangs schon erwähnt, bildet die eine Stirnseite hinsichtlich der zylindrischen Ausbildung des Wärmeübertragers eine Grundseite und die andere Stirnseite eine Deckseite. In/an diesen beiden Seiten, also den beiden Stirnseiten sind Fluideintritts- und Fluidaustrittsöffnungen ausgebildet, die Eingänge zu beziehungsweise Ausgänge von den Fluidführungswegen bilden.

Eine Weiterbildung der Erfindung sieht vor, dass die Stirnseiten eben oder um die Zylinderachse oder Kegelstumpfachse herum verlaufend dachförmig ausgebildet sind. Durch die dachförmige Ausbildung ergibt sich quasi eine "Firstkante", die um die Zylinderachse oder Kegelstumpfachse herum verläuft, insbesondere kreisförmig herum verläuft. Die "Firstkante" stellt die Grenze zwischen einer Innenzone und einer Außenzone dar, wobei dort dementsprechend Fluideintrittsöffnungen und Fluidaustrittsöffnungen - so wie nachstehend erläutert - angeordnet sind.

Nach einer Weiterbildung der Erfindung ist vorgesehen, dass der Wärmeübertrager einen Außenmantel und zwei einander gegenüberliegende Stirnseiten aufweist, und dass mindestens eine der Stirnseiten und der Außenmantel die Fluidöffnungen, insbesondere Fluideintritts- und Fluidaustrittsöffnungen, aufweisen. Demzufolge sind die Fluidöffnungen sowohl an der Stirnseite und an dem Außenmantel angeordnet. Denkbar ist auch, dass der Wärmeübertrager einen Innenmantel und zwei einander gegenüberliegende Stirnseiten aufweist und dass mindestens eine der Stirnseiten und der Innenmantel die Fluidöffnungen, insbesondere Fluideintritts- und Fluidaustrittsöffnungen, aufweisen.

Ferner ist es vorteilhaft, wenn der Wärmeübertrager einen Außenmantel und einen Innenmantel aufweist und dass der Außenmantel und der Innenmantel die Fluidöffnungen, insbesondere Fluideintritts- und Fluidaustrittsöffnungen, aufweisen.

Die Ausgestaltung des Wärmeübertragers kann insbesondere derart getroffen sein, dass mindestens eine der Stirnseiten eine Innenzone und eine sich um die Innenzone herum erstreckende Außenzone aufweist, wobei Fluidöffnungen in der Innenzone Fluideintrittsöffnungen und Fluidöffnungen in der Außenzone Fluidaustrittsöffnungen sind und/oder wobei Fluidöffnungen in der Außenzone Fluideintrittsöffnungen und Fluidöffnungen in der Innenzone Fluidaustrittsöffnungen sind.

Bei der ersten Ausführungsform und optional bei der zweiten Ausführungsform ist vorgesehen, dass an einer der Stirnseiten die Fluidöffnungen in der Innenzone Fluideintrittsöffnungen für ein erstes Fluid sind und dass an der anderen Stirnseite die Fluidöffnungen in der sich um die Innenzone herum erstreckenden Außenzone Fluidaustrittsöffnungen für das erste Fluid sind und dass an der anderen Stirnseite die Fluidöffnungen in der Innenzone Fluideintrittsöffnungen für ein zweites Fluid sind und dass an der einen Stirnseite die Fluidöffnungen in der Außenzone Fluidaustrittsöffnungen für das zweite Fluid sind. Die beiden Fluide strömen demgemäß den unterschiedlichen, einander diametral gegenüberliegenden Stirnseiten des Wärmeübertragers zu, treten dort in Fluideintrittsöffnungen ein, durchströmen den Wärmeübertrager und strömen aus Fluidaustrittsöffnungen aus, die sich an der jeweiligen gegenüberliegenden Stirnseite befinden. Vorzugsweise ist dabei vorgesehen, dass die Fluideintrittsöffnungen in der jeweiligen Innenzone und die Fluidaustrittsöffnungen in der jeweiligen Außenzone liegen. Jeder der beiden Fluidströme tritt demzufolge in der jeweiligen Innenzone ein und aus der jeweiligen Außenzone aus, sodass bei der Betrachtung einer Stirnseite das eine Fluid im inneren Bereich einströmt und aus dem sich ringförmig darum erstreckenden äußeren Bereich das andere Fluid austritt.

Nach einer Weiterbildung der Erfindung ist vorgesehen, dass der mindestens eine Abstandssteg, insbesondere Fluidleitsteg, eine Länge aufweist, die größer ist als die halbe, sich zwischen den Stirnseiten erstreckende Länge des Wärmeübertragers. Vorzugsweise erstreckt sich ein derartiger Abstandssteg über mindestens zwei Drittel der Länge des Wärmeübertragers.

Gemäß der Erfindung ist vorgesehen, dass der mindestens eine Abstandssteg, insbesondere Fluidleitsteg, in mindestens einer der Kreuzstromzonen schräg zur Zylinderachse oder Kegelstumpfachse verläuft. Betrachtet man zwei aneinandergrenzende Fluidführungswege, so verlaufen deren Fluidleitstege im Bereich der Kreuzstromzone jeweils schräg zur Zylinderachse oder Kegelstumpfachse, und zwar gegenläufig schräg, um die Kreuzströmungen der Kreuzstromzonen zu erreichen.

Weiterhin verläuft der mindestens eine Abstandssteg, insbesondere Fluidleitsteg, in der Gegenstromzone oder Gleichstromzone parallel zur Zylinderachse oder Kegelstumpfachse. Betrachtet man wiederum zwei aneinandergrenzende Fluidführungswege, so ergibt sich in den Gegenstromzonen dieser beiden Fluidführungswege eine gegenläufige Strömung der beiden zugehörigen Fluide, und zwar jeweils parallel zur Zylinderachse oder Kegelstromachse. Entsprechendes gilt für die Gleichstromzonen, wobei die Fluide jedoch gleichgerichtet strömen.

Es ist vorteilhaft, wenn mindestens ein Ringkragen vorgesehen ist, der an mindestens einer der Stirnseiten des Wärmeübertragers derart angeordnet ist, dass er die dort gelegenen Fluideintrittsöffnungen von den dort gelegenen Fluidaustrittsöffnungen strömungstechnisch trennt/abschirmt. Dies verhindert Strömungskurzschlüsse, d.h., ein ausströmendes Fluid soll nicht in benachbarte Fluidöffnungen wieder einströmen können. Hierdurch ist eine strömungstechnische Separation der Fluide gewährleistet.

Ferner betrifft die Erfindung ein Wärmeübertragungselement eines Wärmeübertragers, insbesondere so wie er vorstehend beschrieben wurde, wobei das Wärmeübertragungselement keilförmig ausgebildet ist und mindestens einen in axialer Richtung verlaufenden Fluidführungsweg zum Durchströmen eines Fluids aufweist, wobei das Wärmeübertragungselement aufgrund seiner keilförmigen Ausbildung eine keilförmige Querschnittsfläche aufweist, wobei die axiale Richtung rechtwinklig oder etwa rechtwinklig zu der keilförmigen Querschnittsfläche verläuft. Die Keilform ist beispielhaft aus den Figuren der Ausführungsbeispiele ersichtlich.

Die Erfindung betrifft ferner einen Wärmeübertrager mit mindestens einem Wärmeübertragungselement, so wie es in dem vorstehenden Absatz beschrieben ist, und wobei mindestens ein weiteres Wärmeübertragungselement vorgesehen ist, das nicht keilförmig, sondern insbesondere mit parallel beabstandet zueinander verlaufenden Elementseiten versehen ist. Das mindestens eine erstgenannte Wärmeübertragungselement weist somit eine Keilform auf, das heißt, es besitzt eine keilförmige Querschnittsfläche. Das mindestens eine weitere Übertragungselement ist nicht keilförmig gestaltet, sondern besitzt vorzugsweise parallel beabstandet zueinander verlaufende Elementseiten. Bei dem keilförmigen Wärmeübertragungselement bilden die Elementseiten zwischen sich einen Winkel, insbesondere einen spitzen Winkel aus. Bei dem weiteren Wärmeübertragungselement besteht zwischen diesen Seiten kein winkelförmiger Verlauf, sondern die beiden Seiten laufen parallel zueinander. Dem Fachmann ist klar, dass er aus einer bestimmten Anzahl von keilförmig gestalteten Wärmeübertragungselementen und einer bestimmten Anzahl von nicht keilförmig gestalteten Wärmeübertragungselementen, sondern beispielsweise Wärmeübertragungselemente mit parallel verlaufenden Elementseiten, eine Gesamtumrissform des Wärmeübertragers erzielen kann, die für einen konkreten Anwendungsfall besonders vorteilhaft ist. Die "bestimmte Anzahl" umfasst auch die Anzahl "eins". Dabei müssen die unterschiedlich im Querschnitt ausgebildeten Wärmeübertragungselemente nicht unmittelbar aneinander grenzen (können sie jedoch), so ist es beispielsweise möglich, mehrere Wärmeübertragungselemente benachbart zueinander anzuordnen, die eine Keilform aufweisen, dann beispielsweise ein nicht keilförmiges Wärmeübertragungselement daran anschließen zu lassen und dann wieder keilförmige oder mindestens ein keilförmiges Wärmeübertragungselement zu verwenden. Auch können mehrere nicht keilförmige Wärmeübertragungselemente benachbart zueinander liegen und so weiter.

Schließlich ist es vorteilhaft, wenn der Wärmeübertrager mindestens einen Ventilator aufweist, der innerhalb des mindestens einen Ringkragens angeordnet ist. Vorzugsweise sind zwei Ventilatoren vorgesehen, wobei jeder innerhalb des Ringkragens an den einander gegenüberliegenden Stirnseiten des Wärmeübertragers angeordnet sind. Der mindestens eine Ventilator fördert das Fluid, in diesem Falle Luft, durch die zugehörigen Fluidwege der Wärmeübertragungselemente. Ist auf der anderen Seite des Wärmeübertragers ebenfalls ein derartiger Ventilator vorgesehen, so fördert dieser das weitere Fluid, wobei die beiden Fluide durch den Wärmeübertrager einen Wärmeübergang untereinander vollziehen.

Ferner betrifft die Erfindung ein lufttechnisches Gerät mit einem Wärmeübertrager, wie vorstehend beschrieben, und mit mindestens einem Ventilator, vorzugsweise zwei Ventilatoren. Der eine Ventilator ist in mindestens einem Ringkragen angeordnet, vorzugsweise sind die beiden Ventilatoren jeweils in einem Ringkragen angeordnet.

Die Zeichnungen veranschaulichen die Erfindung anhand von Ausführungsbeispielen und zwar zeigt:
- Figur 1: eine perspektivische Ansicht eines Wärmeübertragers,
- Figur 2: den Wärmeübertrager der Figur 1 in aufgeschnittener Ansicht,
- Figur 3: eine Draufsicht auf ein Wärmeübertragungselement des Wärmeübertragers der Figur 1,
- Figur 4: eine perspektivische Seitenansicht des Wärmeübertragungselements der Figur 3, sowie ein angrenzendes Wärmeübertragungselement teilweise in Transparentdarstellung,
- Figur 5: eine Schnittansicht durch den Wärmeübertrager der Figur 1 sowie angebauten Komponenten beziehungsweise ein lufttechnisches Gerät,
- Figur 6: eine perspektivische Darstellung der Anordnung der Figur 5, teilweise in Transparentdarstellung,
- Figur 7: ein weiteres Ausführungsbeispiel eines Wärmeübertrager in perspektivischer Ansicht,
- Figur 8: den Wärmeübertrager der Figur 7 in aufgeschnittener Ansicht,
- Figur 9: eine perspektivische Ansicht von Wärmeübertragungselementen in Explosionsdarstellung,
- Figur 10: eine Draufsicht auf zwei Wärmeübertragungselemente des Wärmeübertragers der Figur 7,
- Figur 11: eine Seitenansicht auf ein Bauteil eines Wärmeübertragungselements,
- Figur 12: eine Seitenansicht auf ein weiteres Bauteil des Wärmeübertragungselements,
- Figur 13: eine Schnittansicht durch den Wärmeübertrager der Figur 7 mit angebauten Komponenten beziehungsweise ein lufttechnisches Gerät,
- Figur 14: eine der Figur 13 entsprechende Darstellung, jedoch in Umfangsrichtung des Wärmeübertragers versetzt um die Breite eines Wärmeübertragungselements,
- Figur 15: ein der Figur 1 entsprechender Wärmeübertrager nach einem anderen Ausführungsbeispiel, jedoch mit einer anderen An- und Abströmung,
- Figur 16: einen Längsschnitt durch den Wärmeübertrager gemäß Figur 15,
- Figur 17: einen Wärmeübertrager nach einem weiteren Ausführungsbeispiel entsprechend der Figur 1, jedoch wiederum mit einer anderen An- und Abströmung,
- Figur 18: einen Längsschnitt durch den Wärmeübertrager der Figur 17,
- Figur 19: ein weiteres Ausführungsbeispiel eines Wärmeübertragers, dessen mittlerer Bereich eine Gegenstromzone oder Gleichstromzone ist und dessen jeweils als Kreuzstromzone ausgebildete Endbereiche dachförmig (winkelförmig) verlaufend ausgebildet sind,
- Figur 20: einen Längsschnitt durch den Wärmeübertrager der Figur 19,
- Figur 21: einen Wärmeübertrager nach einem weiteren Ausführungsbeispiel in gestrichelter Darstellung, wobei der gestrichelt dargestellte Wärmeübertrager eine Kegelstumpfform aufweist und ihn in Vergleich zeigt zu einem zylindrischen Wärmeübertrager (nicht gestrichelt dargestellt) und
- Figur 22: einen Querschnitt durch zwei Wärmeübertragungselemente eines Wärmeübertragers.

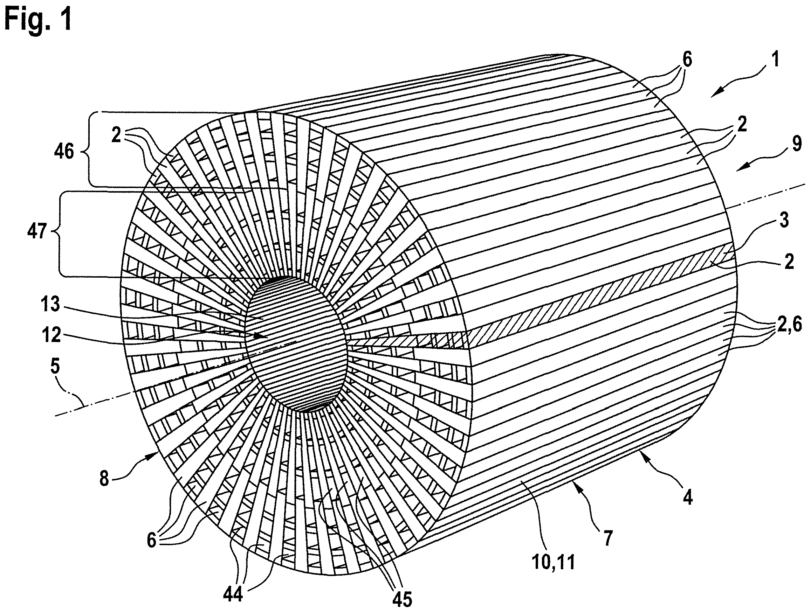

Die Figur 1 zeigt einen Wärmeübertrager 1. Der Wärmeübertrager 1 ist für den Wärmeübergang zwischen zwei Fluiden konzipiert. Bei den beiden Fluiden handelt es sich vorzugsweise um Luft.

Der Wärmeübertrager 1 weist eine Vielzahl von Wärmeübertragungselementen 2 auf. Zur Verdeutlichung ist eines der Wärmeübertragungselemente 2 in der Figur 1 mit einer Schraffur 3 versehen. Der Wärmeübertrager 1 besitzt eine Zylinderform 4; er weist eine Zylinderachse 5 auf, die ihn in axialer Richtung durchsetzt. Wie aus der Figur 1 zu entnehmen ist, sind die Wärmeübertragungselemente 2 um die Zylinderachse 5 herum zueinander benachbart, also aneinander angrenzend, angeordnet, insbesondere entlang eines geschlossenen Kreises.

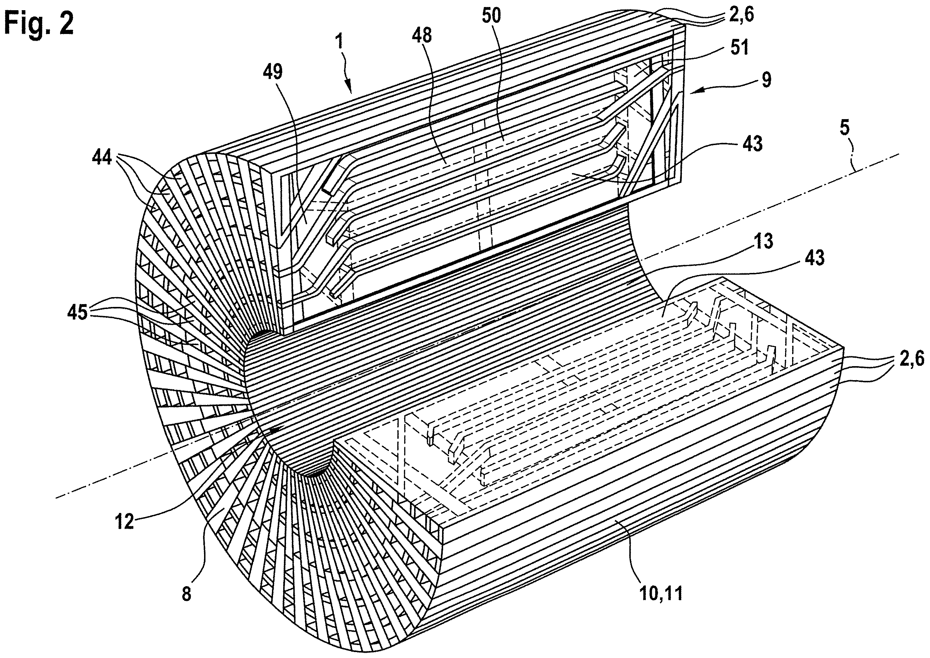

In dem Ausführungsbeispiel der Figur 1 weisen die einzelnen Wärmeübertragungselemente 2 im Hinblick auf ihre Umrissstruktur (äußere Formgebung) jeweils die Form eines Kreisringausschnittszylinders 6 auf. Durch das benachbart zueinander erfolgende Anordnen der Wärmeübertragungselemente 2 um die Zylinderachse 5 herum ergibt sich für den Wärmeübertrager 1 eine Umrissstruktur (äußere Formgebung) wie ein Kreisringzylinder 7. Der Kreisringzylinder 7 des Wärmeübertragers 1 weist zwei einander parallel gegenüberliegende Stirnseiten 8, 9 auf. Ferner besitzt der Kreisringzylinder 7 einen Mantel 10, der einen Außenmantel 11 bildet und in seinem hohlen Inneren 12 einen Innenmantel 13. Der Innenmantel 13 ist besonders gut der Figur 2 zu entnehmen.

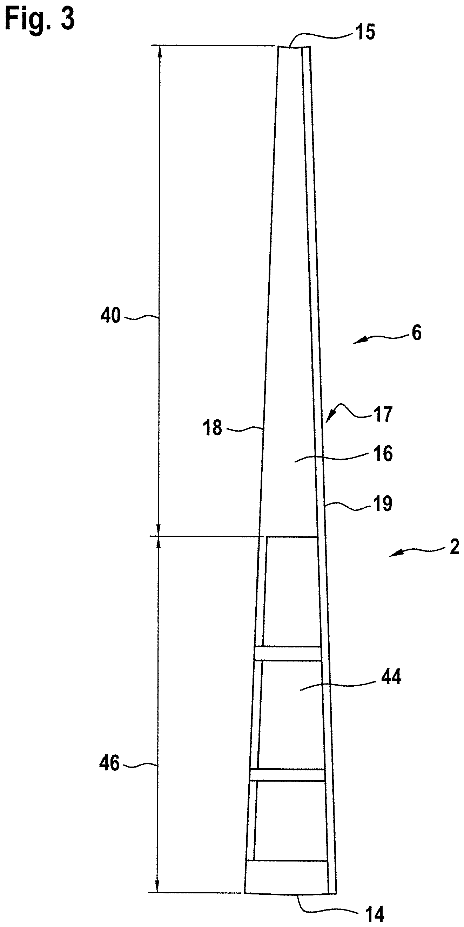

Gemäß Figur 3, die eine Draufsicht von einem Wärmeübertragungselement 2 zeigt, weist dieses aufgrund der Ausgestaltung als Kreisringausschnittszylinder 6 ein Außenmantelelement 14, ein Innenmantelelement 15, Stirnseitenelemente 16 und 17, wobei in der Figur 3 nur das Stirnseitenelement 16 zu sehen ist, sowie Elementseiten 18 und 19 auf. Die Elementseiten 18 und 19 sind leicht zueinander geneigt, wodurch sich insgesamt etwa die Form eines "Tortenstücks" ergibt, bei dem die Spitze fehlt. Entsprechend dem Radius des Außenmantels 11 und des Innenmantels 13 sind die Außenmantelelemente 14 und 15 leicht bogenförmig gestaltet.

Unter Berücksichtigung des Vorstehenden wird deutlich, dass - gemäß einem weiteren Ausführungsbeispiel - eine andere Formgebung des Wärmeübertragungselements 2 zu einer entsprechend abweichenden Formgebung des Wärmeübertragers 1 führt. Wird ein derartiges Wärmeübertragungselement 2 nicht gemäß Figur 3, sondern als Dreieckzylinder ausgebildet, so ist insbesondere das Außenmantelelement 14 als Ebene gestaltet und das Innenmantelelement 15 verläuft bis zum Zentrum des Wärmeübertragers, also bis zur Zylinderachse 5, und endet in einer Spitze. Werden derartige Wärmeübertragungselemente 2 um die Zylinderachse 5 herum angeordnet, so ergibt sich für den Wärmeübertrager die Form, also die Umrissstruktur, eines Mehreckzylinders.

Nach einem anderen Ausführungsbeispiel kann ein Wärmeübertragungselement 2 - wiederum in Abweichung von der Darstellung der Figur 3 - als Trapezzylinder ausgebildet sein. Dies bedeutet, dass das Außenmantelelement 14 und das Innenmantelelement 15 jeweils als Ebene ausgestaltet sind, mit der Folge, dass der Wärmeübertrager 1 dann die Umrissstruktur als Mehreckhohlzylinder erhält.

In einem weiteren Ausführungsbeispiel kann das Wärmeübertragungselement 2 als Kreisausschnittszylinder gestaltet sein, d.h., das Außenmantelelement 14 ist bogenförmig gestaltet und anstelle des Innenmantelelements 15 ergibt sich eine Spitze, die bis zur Zylinderachse 5 reicht. Dies führt zu einem Wärmeübertrager mit einer Umrissstruktur als Kreiszylinder und entspricht damit der Darstellung der Figur 1, jedoch ohne kreisförmigen Innenkanal, also ohne Innenmantel 13.

Die nachfolgenden Ausführungen zum inneren Aufbau der einzelnen Wärmeübertragungselemente 2 orientieren sich an den Figuren 1 bis 6, also bei der Ausgestaltung der Wärmeübertragungselemente 2 als Kreisringausschnittszylinder 6. Diese Ausführungen gelten jedoch entsprechend für die vorstehend genannten weiteren Ausführungsbeispiele der Wärmeübertragungselemente 2 als Dreieckzylinder oder Trapezzylinder oder Kreisausschnittszylinder.

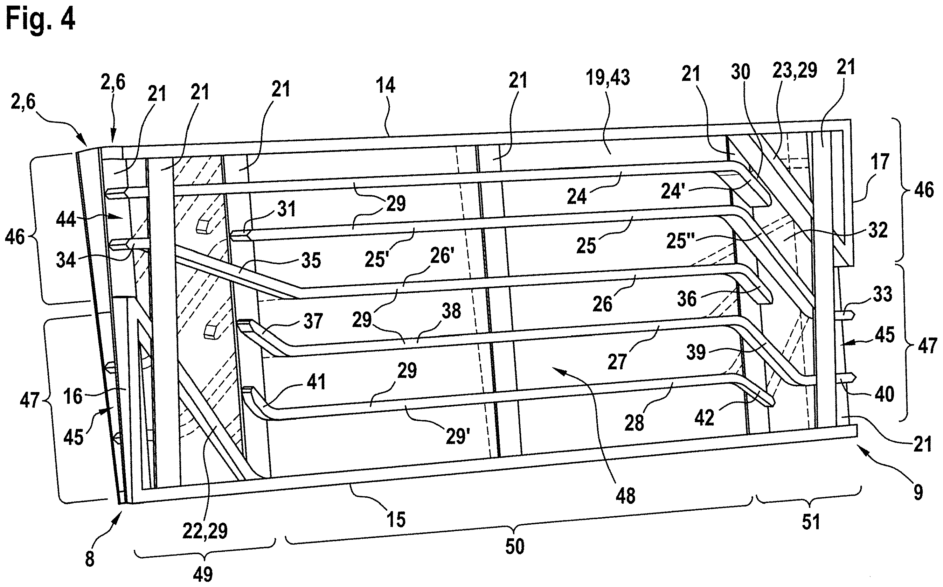

Der innere Aufbau der Wärmeübertragungselemente 2 geht besonders deutlich aus der Figur 4 hervor, die ein aufgeschnittenes Wärmeübertragungselement 2 im Vordergrund zeigt und ein dahinterliegendes Wärmeübertragungselement 2 größtenteils in durchscheinender Transparentdarstellung. Das hinten liegende, also im Wesentlichen nur transparent erscheinende Wärmeübertragungselement 2 ist gleichartig wie das im Vordergrund dargestellte Wärmeübertragungselement 2 ausgestaltet. Demzufolge weist das in der Figur 4 hinten liegende Wärmeübertragungselement 2 in gleicher Weise wie das im Vordergrund liegende ein Außenmantelelement 14, ein Innenmantelelement 15 sowie in gleicher Weise mehrere radial verlaufende Radialflachstege 21 auf, wobei jedoch die Radialflachstege 21 des im Hintergrund liegenden Wärmeübertragungselements 2 gegenüber den Radialflachstegen 21 des im Vordergrund befindlichen Wärmeübertragungselements 2 leicht axial versetzt liegen, wie dies aus der Figur 4 ersichtlich ist. Im Innern des im Vordergrund liegenden Wärmeübertragungselements 2 der Figur 4 befinden sich Fluidleitstege 29, auf die nachstehend noch näher eingegangen wird. Die Fluidleitstege 29 dienen der Führung eines Fluids, das durch dieses Wärmeübertragungselement 2 strömt, wobei dies bei dem im Vordergrund befindlichen Wärmeübertragungselement 2 von unten rechts nach oben links oder umgekehrt von oben links nach unten rechts erfolgt. Bei dem im Hintergrund der Figur 4 liegenden Wärmeübertragungselement 2 erfolgt die Durchleitung eines anderen Fluids entsprechend umgekehrt, die jeweiligen Fluidleitstege 29 sind also derart angeordnet/ausgebildet, dass das Fluid von oben rechts nach unten links beziehungsweise von unten links nach oben rechts geleitet wird (je nach Strömungsrichtung des Fluids). Diese unterschiedliche Fluiddurchleitung bei den beiden genannten Wärmeübertragungselementen 2 wiederholt sich in entsprechender Weise bei sämtlichen Wärmeübertragungselementen 2 des Wärmeübertragers 1, das heißt also, dass benachbart zueinander liegende Wärmeübertragungselemente 2 stets eine entsprechend andere Fluiddurchleitung vornehmen. Dabei befindet sich jeweils zwischen zwei benachbart zueinander liegenden Wärmeübertragungselementen 2 stets nur eine erste Wärmeübertragungswand 43, auf die nachstehend noch näher eingegangen wird. Im Folgenden wird nur das im Vordergrund der Figur 4 dargestellte Wärmeübertragungselement 2 näher erläutert. Diese Erläuterung gilt dann für alle Wärmeübertragungselemente 2 entsprechend.

Das genannte Wärmeübertragungselement 2 weist - gemäß Figur 4 - mehrere radial verlaufende Radialflachstege 21 auf, die sich zwischen dem Außenmantelelement 14 und dem Innenmantelelement 15 erstrecken. Ferner geht aus der Figur 4 ein Stirnseitenelement 16 und ein Stirnseitenelement 17 hervor. Das Stirnseitenelement 16 erstreckt sich vom Innenmantelelement 15 in Richtung auf das Außenmantelelement 14 derart, dass zu letzterem ein Abstand verbleibt. Das Stirnseitenelement 16 wird abgestützt von einem Stützsteg 22, der schräg verlaufend bis zum Innenmantelelement 15 reicht. In entsprechend umgekehrter Weise ist das Stirnseitenelement 17 angeordnet. Es geht aus von dem Außenmantelelement 14 und erstreckt sich in Richtung auf das Innenmantelelement 15, lässt jedoch einen Abstand zu diesem. Ferner ist zur Abstützung des Stirnseitenelements 17 ein Stützsteg 23 vorgesehen, der schräg verlaufend bis zum Außenmantelelement 14 verläuft. Innerhalb des Wärmeübertragungselements 2 sind mehrere Abstandsstege 24, 25, 26, 27 und 28 angeordnet, die alle jeweils als Fluidleitsteg 29 ausgebildet sind. Durch die Ausbildung der Abstandsstege 24 bis 28 als Fluidleitstege 29 weisen diese eine Breite entsprechend der über den Radius zunehmenden Breite des Wärmeübertragungselements 2 auf, dass - wie die Figur 3 deutlich zeigt - im Bereich des Innenmantelelements 15 nicht so breit wie im Bereich des Außenmantelelements 14 ausgebildet ist. Auch die Stützstege 22, 23 bilden Fluidleitstege 29 mit einer Breite wie vorstehend erläutert.

Der Abstandssteg 24 verläuft im Wesentlichen parallel zum Außenmantelelement 14 und damit parallel zur Zylinderachse 5 (siehe Figuren 1 und 2), wobei er auf Höhe des Stirnseitenelements 16 beginnt und sich fast über die gesamte Länge des Wärmeübertragungselements 2 erstreckt sowie im Bereich des Stützstegs 23 einen abgewinkelten Verlauf derart einnimmt, dass zwischen dem Stützsteg 23 und dem abgewinkelten Bereich 24' des Abstandsstegs 24 ein Schrägkanal 30 ausgebildet wird. Der Abstandssteg 25 verläuft mit einem Bereich 25' zunächst parallel zum Außenmantelelement 14, liegt mit seinem Ende 31 jedoch zurückversetzt, also mit axialem Abstand zum Stirnseitenelement 16. Ein abgewinkelter Bereich 25" des Abstandsstegs 25 verläuft parallel zum Stützsteg 23 und bildet dadurch einen Schrägkanal 32 aus. Ein Endabschnitt 33 des Abstandsstegs 25 verläuft wiederum parallel zum Außenmantelelement 14 und endet mit radialem Abstand und auf Höhe des Stirnseitenelements 17. Der Abstandssteg 26 erstreckt sich mit einem Endbereich 34 parallel zum Außenmantelelement 14. Daran schließt sich ein schräg verlaufender Bereich 35 an, der in einem Bereich 26' des Abstandssteg 26 übergeht, wobei letzterer parallel zum Außenmantelelement 14 sowie zu entsprechenden Bereichen der Abstandsstege 24 und 25 verläuft. Ein abgewinkelter Endbereich 36 des Abstandsstegs 26 verläuft parallel zum Stützsteg 23 und damit zu dem entsprechenden Bereich 24', 25" des Abstandsstegs 24 und des Abstandsstegs 25 und endet mit axialem Abstand zum Stirnseitenelement 17. Der Abstandssteg 27 beginnt mit axialem Abstand zum Stirnseitenelement 16 mit einem schräg verlaufenden Bereich 37, der in einen Bereich 38 übergeht, wobei letzterer parallel zum Außenmantelelement 14 und zu entsprechenden Bereichen der Abstandsstege 24, 25 und 26 verläuft. Ein sich anschließender Bereich 39 des Abstandsstegs 27 verläuft schräg in Richtung auf das Innenmantelelement 15 und geht anschließend in einen Endabschnitt 40 über, der parallel und mit Abstand zum Endabschnitt 33 verläuft. Der Abstandssteg 28 verläuft mit einem Endbereich 41 parallel zum Endbereich 37 und geht dann in einen Axialabschnitt 29' über, der parallel zum Außenmantelelement 14 verläuft und geht dann über in einen schräg verlaufenden Endbereich 42, der parallel und mit Abstand zum Bereich 39 verläuft und axialen Abstand zum Stirnseitenelement 17 einhält. Von außen nach innen betrachtet ergibt sich daher insgesamt folgende Reihenfolge: Außenmantelelement 14, Abstandssteg 24, Abstandssteg 25, Abstandssteg 26, Abstandssteg 27, Abstandssteg 28 und Innenmantelelement 15, wobei alle genannten Bauteile radiale Abstände zueinander einhalten, sodass entsprechende Kanäle zwischen ihnen ausgebildet werden.

Aus der Figur 4 ist erkennbar, dass die Elementseite 19 von einer ersten Wärmeübertragungswand 43 gebildet ist, die sich über die gesamte Fläche entsprechend der Figur 4 des Wärmeübertragungselements 2 erstreckt und transparent dargestellt ist, sodass das dahinterliegende Wärmeübertragungselement 2 schemenhaft erkennbar ist. Zu erwähnen ist noch, dass die Stirnseitenelemente 16 und 17 an entsprechenden Radialflachstegen 21 befestigt sind und auch die Abstandsstege 24 bis 28 sowie das Außenmantelelement 14 und das Innenmantelelement 15 von entsprechenden Radialflachstegen 21 gehalten werden. Die erste Wärmeübertragungswand 23 stützt sich ebenfalls an den entsprechenden Radialflachstegen 21 ab, jedoch auch an den Abstandsstegen 24 bis 28 sowie dem Außenmantelelement 14 und dem Innenmantelelement 15. Dies ist insbesondere dann gegeben, wenn die erste Wärmeübertragungswand 43 eine entsprechende Flexibilität aufweist. Insbesondere ist die erste Wärmeübertragungswand 43 als Folie ausgebildet, die optional diffusionsoffen, insbesondere dampfdurchlässig ausgebildet ist.

Da - wie bereits erwähnt - das in der Figur 4 folgende, untenliegende und transparent dargestellte Wärmeübertragungselement 2 mit sich unterscheidendem Fluidströmungsverlauf an das vorstehend erläuterte Wärmeübertragungselement 2 anschließt, liegt dort der entsprechend andersartige, transparent erkennbare Schrägverlauf der entsprechenden Abschnitte und Bereiche der zugehörigen Abstandsstege 24 bis 28 vor, wobei die Anordnung vorzugsweise derart getroffen ist, dass die parallel zum Außenmantelelement 14 beziehungsweise Innenmantelelement 15 verlaufenden Bereiche dieser Bauteile mit den entsprechenden Bereichen des im Vordergrund der Figur 4 dargestellten Bereichen der gleichartigen Bauteile fluchten.

Aufgrund des Abstandes des Stirnseitenelements 16 zum Außenmantelelement 14 wird dort eine Fluidöffnung 44 und aufgrund des Abstandes des Stirnseitenelements 17 zum Innenmantelelement 15 wird dort eine Fluidöffnung 45 ausgebildet. Der Abstandssteg 24 und der Abstandssteg 26 reicht bis in die Fluidöffnung 44 hinein. Der Abstandssteg 25 und der Abstandssteg 27 reicht bis in die Fluidöffnung 45 hinein. Aus der Figur 4 ist deutlich erkennbar, dass sich die Fluidöffnung 44 in einer Außenzone 46 und dass sich die Fluidöffnung 45 in einer Innenzone 47 befindet. Die Innenzone 47 liegt - in radialer Richtung des Wärmeübertragers 1 betrachtet - weiter innen und die Außenzone 46 radial weiter außen. Vorzugsweise ist die Anordnung derart getroffen, dass sich die Innenzone 47 an die Außenzone 46 - in radialer Richtung - anschließt, ohne dass eine Überschneidung vorliegt.

Jedem Wärmeübertragungselement 2 ist die erwähnte erste Wärmeübertragungswand 43 zugeordnet. Bei dem aus der Figur 4 nur transparent ersichtlichen Wärmeübertragungselement 2 liegt die zugehörige erste Wärmeübertragungswand mit Abstand zur ersichtlichen Wärmeübertragungswand 43 des im Vordergrund dargestellten Wärmeübertragungselements 2. Dies hat zur Folge, dass aneinandergrenzende Wärmeübertragungselemente 2 stets eine gemeinsame erste Wärmeübertragungswand 43 aufweisen.

Aufgrund der vorstehend erläuterten Gestaltung wird jedes Wärmeübertragungselement 2 von einem Fluidführungsweg 48 für die Durchleitung eines Fluids, insbesondere Luft, durchsetzt, wobei die Enden des Fluidführungswegs 48 von den Fluidöffnungen 44 und 45 gebildet sind und der Fluidführungsweg 48 im Innern strukturiert wird durch die Fluidabstandsstege 24 bis 28, die allesamt Fluidleitstege 29 bilden. Dies hat zur Folge, dass ein den Fluidführungsweg 48 durchströmendes Fluid entsprechend kanalisiert wird. Geht man einmal beispielsweise davon aus, ein Fluid tritt in die Fluidöffnung 44 ein, so wird es durch den entsprechenden Schrägverlauf entsprechender Bereiche der Fluidleitstege 29 im Wesentlichen gleichmäßig über die gesamte radiale Breite des Fluidführungswegs 48 verteilt und kurz vor dem Austritt aus der Fluidöffnung 45 durch wiederum entsprechende schräg verlaufende Bereiche der Fluidleitstege 29 umgelenkt und kann dann insbesondere homogen aus der Fluidöffnung 45 ausströmen. Die entsprechend schräg verlaufenden Abschnitte der Fluidleitstege 29 wurden vorstehend bei der Abhandlung der Abstandsstege 24 bis 28 verdeutlicht. Auch die beiden Stützstege 22 und 23 tragen zur Fluidlenkung bei.

Gemäß Figur 4 liegen bei benachbarten Wärmeübertragungselementen 2 die Fluidöffnungen 44 und 45 an unterschiedlichen Positionen. Dies kommt durch die vorstehend beschriebene unterschiedliche Ausgestaltung jeweils benachbarter Wärmeübertragungselemente 2 zustande. Bei dem im Vordergrund liegenden Wärmeübertragungselement 2 der Figur 4 befindet sich die Fluidöffnung 44 an der Stirnseite 8 in der Außenzone 46 und die Fluidöffnung 45 an der Stirnseite 9 in der Innenzone 47. Bei dem dahinterliegenden, größtenteils transparent dargestellten Wärmeübertragungselement 2 liegt die Fluidöffnung 45 an der Stirnseite 8 in der Innenzone 47 und daher schräg benachbart zu der sich in der Außenzone 46 befindlichen Fluidöffnung 44 des im Vordergrund liegenden Wärmeübertragungselements 2. Die vorstehende Anordnung beschreibt die Situation in einem Bereich der Stirnseite 8. Dementsprechend liegt in einem Bereich der Stirnseite 9 folgende Situation vor: Bei dem im Vordergrund liegenden Wärmeübertragungselement 2 befindet sich - wie ausgeführt - die Fluidöffnung 45 in der Innenzone 47. Die Fluidöffnung 44 des dahinterliegenden Wärmeübertragungselements 2 befindet sich dementsprechend in der Außenzone 46. Die vorstehend erläuterte Situation liegt alternierend bei den aneinandergrenzenden Wärmeübertragungselementen 2 vor, und zwar über den gesamten Kreisringzylinder 7 des Wärmeübertragers 1 gemäß Figur 1.

Da aufgrund der erläuterten Situation aneinandergrenzender Wärmeübertragungselemente 2 die schräg verlaufenden Bereiche der Abstandsstege 24 bis 28 und die schräg verlaufenden Stützstege 22 und 23 in entsprechend unterschiedliche Richtungen bei den aneinandergrenzenden Wärmeübertragungselementen 2 weisen, ergibt sich - wie der Figur 4 auch zu entnehmen ist - bei den jeweils aneinandergrenzenden Fluidführungswegen 48 der Wärmeübertragungselemente 2 - in Richtung der Längserstreckung, also in Richtung der Zylinderachse 5, betrachtet - eine zonale Aufteilung in drei Zonen, nämlich eine erste Kreuzstromzone 49, eine daran anschließende Gegenstromzone 50 und eine wiederum daran anschließende zweite Kreuzstromzone 51.

Aus dem Vorstehenden wird deutlich, dass der erfindungsgemäße Wärmeübertrager 1 aus einzelnen Wärmeübertragungselementen 2 besteht, die zur Bildung eines Kreisringzylinders 7 aneinandergrenzend angeordnet sind, wobei sie jeweils strömungstechnisch mittels einer ersten Wärmeübertragungswand 43 voneinander abgetrennt sind, und wobei in jedem Wärmeübertragungselement 2 ein Fluidführungsweg 48 verläuft, der sich in drei Zonen unterteilt, nämlich zwei Kreuzstromzonen 49 und 51 mit einer dazwischenliegenden Gegenstromzone 50. Erfolgt eine Zuführung von zwei Fluiden an den Stirnseiten 8 und 9 jeweils in der Innenzone 47, so kreuzen sich die Fluidströmungen benachbarter Wärmeübertragungselemente 2 in den Kreuzstromzonen 48 und 51 und im Bereich der Gegenstromzonen 50 strömen die beiden Fluide in zueinander entgegengesetzten Richtungen. Insgesamt erfolgt ein Wärmeübergang zwischen den beiden Fluiden durch die Wärmeübertragungswand 43 hindurch.

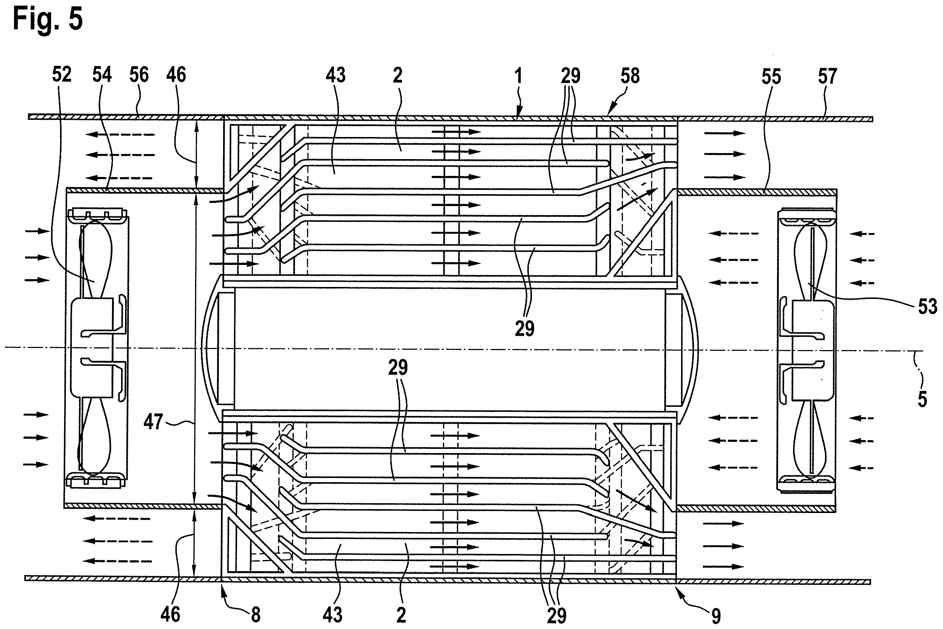

Die vorstehend erläuterte Betriebssituation wird in der Figur 5 verdeutlicht, wobei das eine Fluid mit durchgezogenen Strömungspfeilen und das andere Fluid mit gestrichelten Strömungspfeilen gekennzeichnet ist. Der Antrieb der Fluide erfolgt mittels zweier Ventilatoren 52 und 53, die in Ringkragen 54 und 55 angeordnet sind, welche parallel zur Zylinderachse 5 verlaufen und derart an den Stirnseiten 8 und 9 des Wärmeübertragers 1 angeordnet sind, dass jeweils die Außenzone 46 von der Innenzone 47 strömungstechnisch abgetrennt sind. Die Außenzone 46 wird auf beiden Seiten des Wärmeübertragers 1 mittels eines Strömungsrohrs 56, 57, vorzugsweise mit kreisförmigem Querschnitt, begrenzt. Vorzugsweise verlaufen die Strömungsrohre 56 und 57 parallel zur Zylinderachse 5. In der Figur 5 ist die mit gestrichelten Strömungspfeilen gekennzeichnete Strömung des einen Fluids nur im Bereich des zugehörigen Ventilators 53 und in der gegenüberliegenden Außenzone 46 ersichtlich. Dies resultiert aus der Längsschnittführung durch die insgesamt ein lufttechnisches Gerät 58 bildende Anordnung der Figur 5. In einem jeweiligen Wärmeübertragungselement 2, das an die aus der Figur 5 hervorgehenden Wärmeübertragungselementen 2 angrenzt, würde sich eine entsprechende Strömung einstellen und zwar von rechts nach links. Diese Fluidströmung tritt in die Innenzone 47 an der Stirnseite 9 ein und in der Außenzone 46 der Stirnseite 8 aus dem Wärmeübertrager 1 aus und ist mit gestrichelten Pfeilen in der Figur 5 erkennbar.

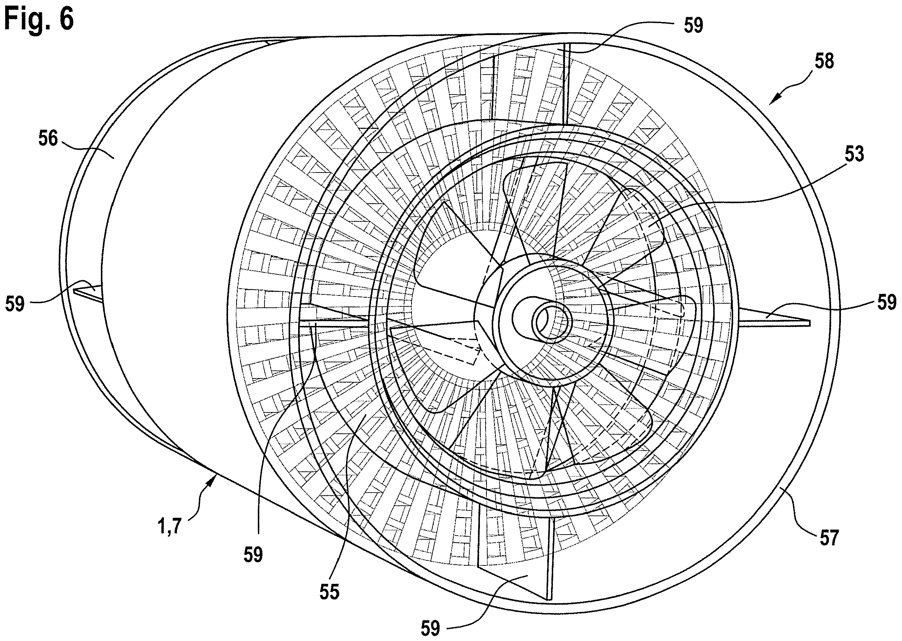

Die Figur 6 verdeutlicht die Anordnung der Figur 5 in perspektivischer Ansicht. Dort ist erkennbar, dass die Ringkragen 54 und 55 von Radialstreben 59 am Strömungsrohr 56 beziehungsweise 57 gehalten sind.

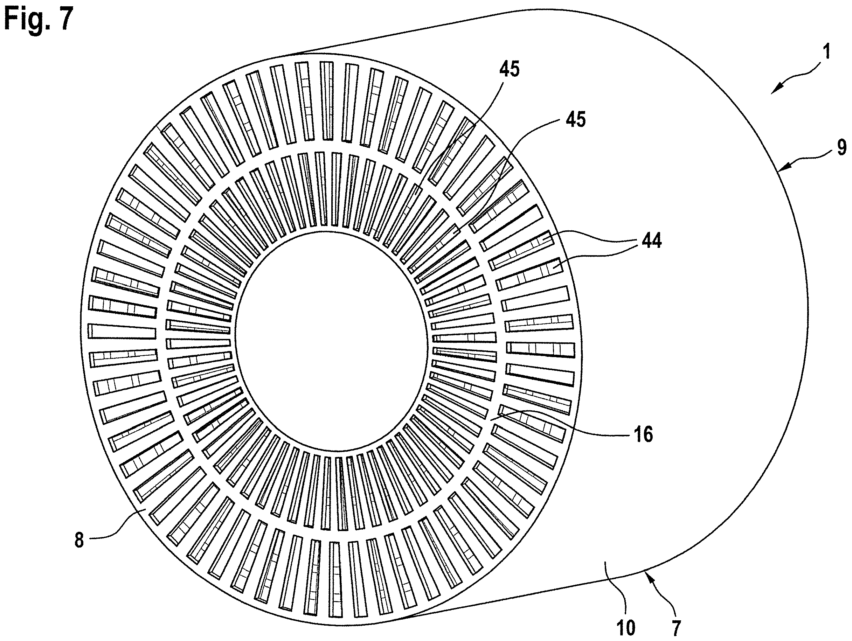

Die Figur 7 zeigt ein weiteres Ausführungsbeispiel eines Wärmeübertragers 1. Ebenso wie der Wärmeübertrager der Figur 1 ist der Wärmeübertrager der Figur 7 für einen Wärmeübergang zwischen zwei Fluiden konzipiert. Bei den Fluiden handelt es sich vorzugsweise um Luft. Der Aufbau des Wärmeübertragers 1 der Figur 7 entspricht weitgehend dem Aufbau des Wärmeübertragers 1 der Figur 1, sodass auf die Figuren 1 bis 6 und die zugehörige Beschreibung Bezug genommen wird. Nachstehend werden jedoch die zwischen diesen beiden Ausführungsbeispielen bestehenden Unterschiede erläutert.

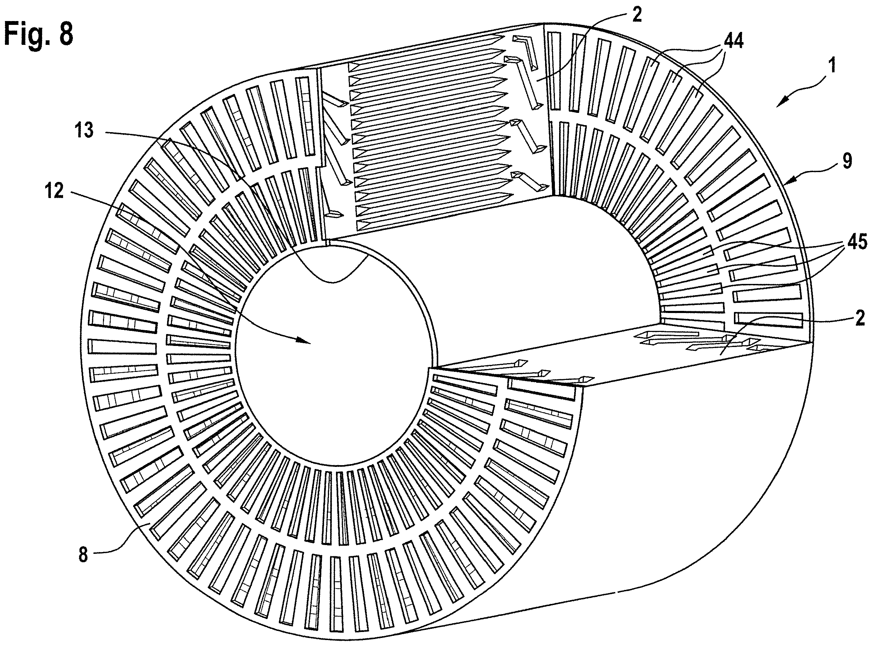

Die Figur 8 zeigt den Wärmeübertrager 1 der Figur 7 in aufgeschnittener Darstellung, sodass in das Innere geblickt werden kann und die einzelnen, benachbart über den Umfang aneinandergereihten Wärmeübertragungselemente 2 erkennbar werden. Bei den beiden Ausführungsbeispielen der Figuren 1 und 7 ist es denkbar, dass der Mantel 10 aus einzelnen Außenmantelelementen 14 zusammengesetzt ist oder als zusammenhängender Rohrabschnitt vorliegt. Entsprechendes gilt für das Innenmantelelement 15 dieser beiden Ausführungsbeispiele. Für beide Ausführungsbeispiele kann ferner vorgesehen sein, dass sich die Stirnseiten 8 und 9 aus einzelnen Stirnseitenelementen 16 und 17 zusammensetzen oder es sind scheibenförmige, zusammenhängende Stirnseiten 8 und 9 mit entsprechenden Fluidöffnungen 44 und 45 vorhanden. Gleichwohl lassen sich bei beiden Ausführungsbeispielen die Wärmeübertragungselemente 2 im Hinblick auf ihre Umrissstruktur als Kreisringausschnittszylinder 6 ansehen und der gesamte Wärmeübertrager ist als Kreisringzylinder 7 im Hinblick auf die Umrissstruktur gestaltet. Auch beim Ausführungsbeispiel der Figuren 7 bis 14 sind andersartige Umrissstrukturen für die Wärmeübertragungselemente 2 und den gesamten Wärmeübertrager 1 denkbar, so wie bereits zum Ausführungsbeispiel der Figur 1 erläutert.

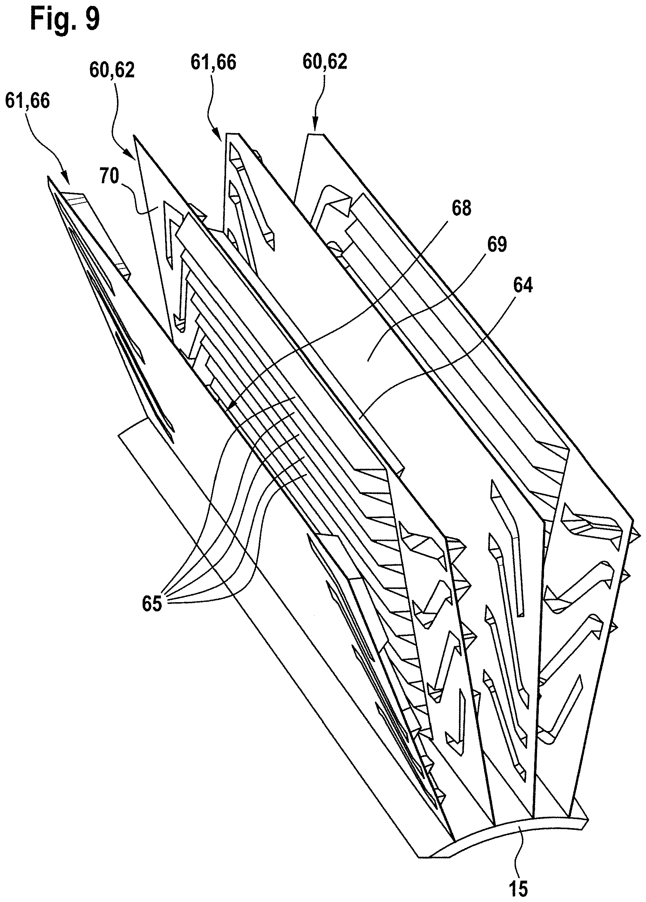

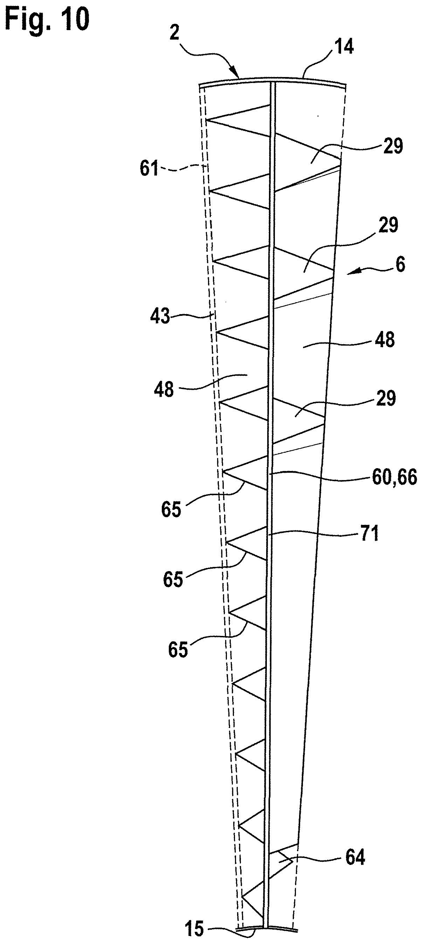

Gemäß der Figuren 9 und 10 wird nachfolgend der Aufbau der Wärmeübertragungselemente 2 näher erläutert. In der Schnittansicht der Figur 10 ist ein Wärmeübertragungselement 2 ohne die zugehörigen Bereiche der Stirnseiten 8 und 9 dargestellt. Dieses Wärmeübertragungselement 2 weist zwei Fluidführungswege 48 für die Durchleitung von zwei Fluiden auf, die zueinander im Wärmeübergang stehen. Ferner stehen jeweils benachbarte Wärmeübertragungselemente 2, also deren von Fluiden durchströmte Fluidführungswege 48 im Wärmeübergang zueinander.

Die Figur 9 zeigt zwei Arten von Wärmeübertragungselementbauteilen 60 und 61, wobei das Wärmeübertragungselementbauteil 60 ein erstes Wärmeübertragungselementbauteil 60 und das Wärmeübertragungselementbauteil 61 ein zweites Wärmeübertragungselementbauteil 61 ist. In der Explosionsdarstellung der Figur 9 ist erkennbar, dass - über den Umfang des Wärmeübertragers 1 gesehen - alternierend die Wärmeübertragungselementbauteile 60 und 61 benachbart zueinander angeordnet werden. In der Realität besteht jedoch nicht der aus der Figur 9 hervorgehende Abstand zwischen diesen Wärmeübertragungselementbauteilen 60 und 61, sondern sie liegen verbunden aneinander, sodass gasdichte Fluidführungswege 48 entstehen. Die Wärmeübertragungselementbauteile 60 und 61 werden nur aneinandergelegt oder zusätzlich miteinander verbunden, beispielsweise mittels eines Schweißvorgangs oder einer anderen Verbindungstechnik.

Vorzugsweise sind die Wärmeübertragungselementbauteile 60 und 61 jeweils als Kunststofffolienformteile 62, 66 ausgebildet, insbesondere wie dies aus der Blistertechnik bekannt ist. Diese Kunststofffolienformteile 62, 66 können vorzugsweise in einem thermoformtechnischen Verfahren hergestellt werden. Die Kunststofffolienformteile 62, 66 sind selbsttragend, d.h., sie weisen eine entsprechende Eigenstabilität auf, wobei die verwendete Folie gasdicht und auch diffusionsdicht ist, sodass der daraus hergestellte Wärmeübertrager 1 ein sensibler Wärmeübertrager 1 ist und nicht - wie das Ausführungsbeispiel der Figuren 1 bis 6, als Enthalpie vorliegt.

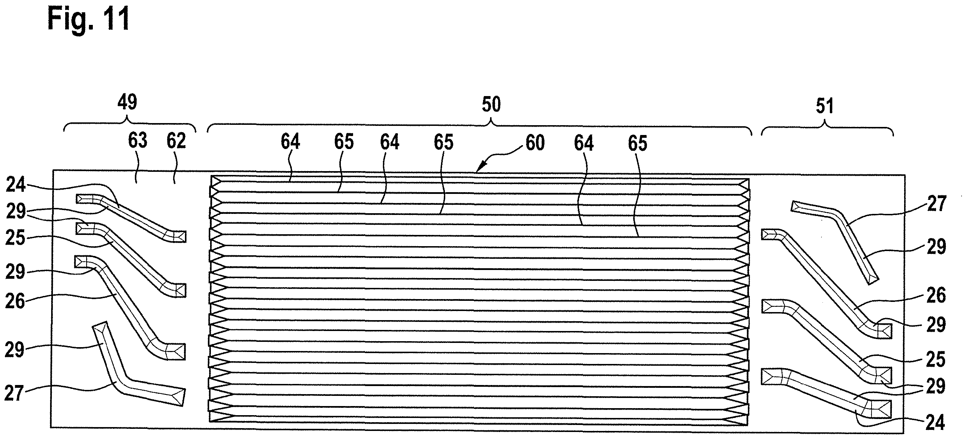

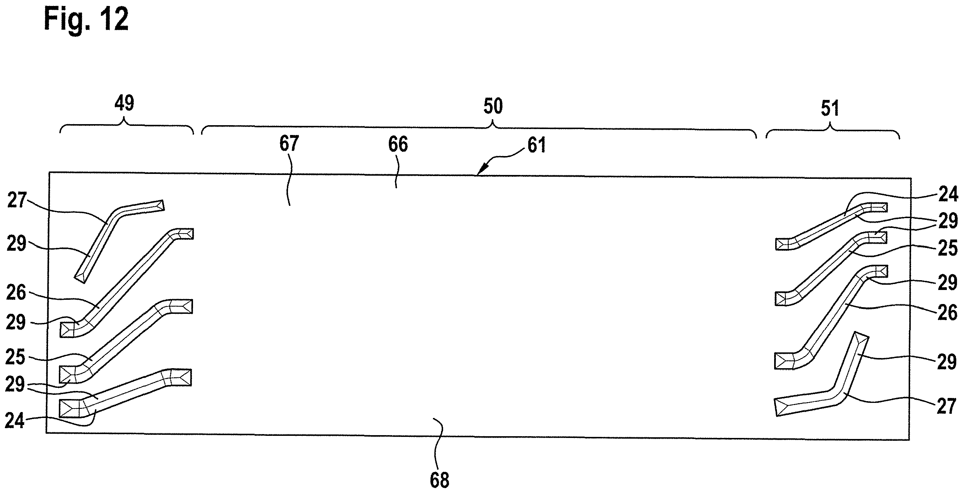

Anhand der Figuren 11 und 12 wird der Aufbau der beiden Wärmeübertragungselementbauteile 60 und 61 nunmehr näher erläutert und anschließend der Zusammenbau, insbesondere im Hinblick auf die Figuren 9 und 10.

Das erste Wärmeübertragungselementbauteil 60 weist - gemäß Figur 11 - ein Kunststofffolienformteil 62 auf, das einstückig gestaltet ist und drei Zonen besitzt, nämlich eine erste Kreuzstromzone 49, eine daran anschließende Gegenstromzone 50 und eine daran anschließende zweite Kreuzstromzone 51. Die Kreuzstromzone 49 weist aus der Ebene 63 des Kunststofffolienformteils 62 nach vorne, also aus der Papierebene herausragende, tiefgezogene Abstandsstege 24, 25, 26 und 27 auf, wobei die Abstandsstege 24 bis 27 jeweils Fluidleitstege 29 bilden. Von der Rückseite des Kunststofffolienformteils 62 her betrachtet ergeben sich der Formgebung der Fluidleitstege 29 entsprechende Vertiefungen. Gleiches gilt für die im Nachstehenden noch erwähnten weiteren aus der Ebene 63 des Kunststofffolienformteils 62 herausgearbeiteten, tiefgezogenen Strukturen, sowie bei den Strukturen des zweiten Wärmeübertragungselementbauteils 61. Entsprechende Verhältnisse liegen in der zweiten Kreuzstromzone 51 hervor, auch dort sind Abstandsstege 24 bis 27 aus der Papierebene der Figur 11 herausstehend gebildet, wobei diese Abstandsstege 24 bis 27 ebenfalls Fluidleitstege 29 bilden. Die Abstandsstege 24 bis 26 in den Kreuzstromzonen 49 und 51 besitzen einen abgekröpften Verlauf und der Abstandssteg 27 jeweils einen winkelförmigen Verlauf. Vergleicht man die entsprechenden Abstandsstege 24 bis 27 der beiden Seiten, also in der ersten Kreuzstromzone 49 und der zweiten Kreuzstromzone 51, so sind diese derart spiegelverkehrt angeordnet, dass ein in der Figur 11 links oben horizontal eingeleitetes Fluid über die gesamte Breite des Wärmeübertragungselementbauteils 60 verteilt wird, dabei die Gegenstromzone 50 durchströmt und rechts im unteren Bereich wieder horizontal austritt. Auf die Ausgestaltung der Gegenstromzone 50 wird nunmehr eingegangen. Diese besteht aus einer Vielzahl von tiefgezogenen Abstandsstegen 64 und 65, die geradlinig verlaufen und sich von der ersten Kreuzstromzone 49 bis zur zweiten Kreuzstromzone 51 erstrecken und parallel zur Zylinderachse 5, also axial, verlaufen. Die Abstandsstege 64 und 65 wechseln über die Breite des Kunststofffolienformteils 62 gesehen alternierend ab, wobei ein Abstandssteg 64 aus der Papierebene nach vorn herausragt und ein Abstandssteg 65 aus der Papierebene nach hinten herausragt, sodass insgesamt ein zickzackförmiger Verlauf über die radiale Breite des Wärmeübertragungselementbauteils 60 vorliegt. Gemäß Figur 10 wird deutlich, dass dabei die Höhe dieses Zickzackverlaufs vom Inneren des Wärmeübertragers 1 nach außen gesehen zunimmt, um eine entsprechende Kreisringausschnittszylinderkontur zu erzielen (die gestrichelten Linien sind dabei zu berücksichtigen).

Die Figur 12 zeigt das zweite Wärmeübertragungselementbauteil 61, das als Kunststofffolienformteil 66 ausgestaltet ist und eine plattenförmige Ebene 67 besitzt. Auch dieses Kunststofffolienformteil 66 weist drei Zonen auf, nämlich die erste Kreuzstromzone 49, die daran anschließende Gegenstromzone 50 und die daran anschließende zweite Kreuzstromzone 51. Ein Vergleich der Kreuzstromzonen 49 und 51 der Figur 12 mit den entsprechenden Zonen der Figur 11 zeigt, dass sie im Hinblick auf die dort vorhandenen Abstandsstege 24 bis 27, die ebenfalls Fluidleitstege 29 bilden, "gegenläufig" gestaltet sind, sodass - wiederum von links nach rechts betrachtet - ein auf der linken Seite im unteren Bereich horizontal eintretendes Fluid über die gesamte Breite des Wärmeübertragungselementbauteils 61 verteilt wird und auf der rechten Seite im oberen Bereich wieder horizontal ausströmt. Im Gegensatz zum ersten Wärmeübertragungselementbauteil 60 der Figur 11 weist das zweite Wärmeübertragungselementbauteil 61 der Figur 12 in der Gegenstromzone 50 keine Struktur auf, sondern ist plattenförmig eben entsprechend der Ebene 67 gestaltet.

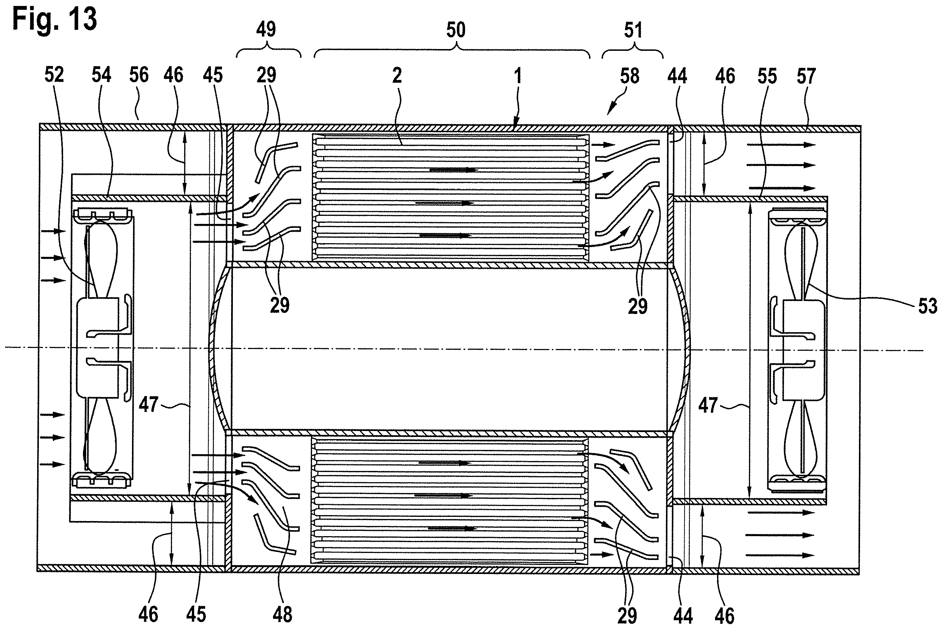

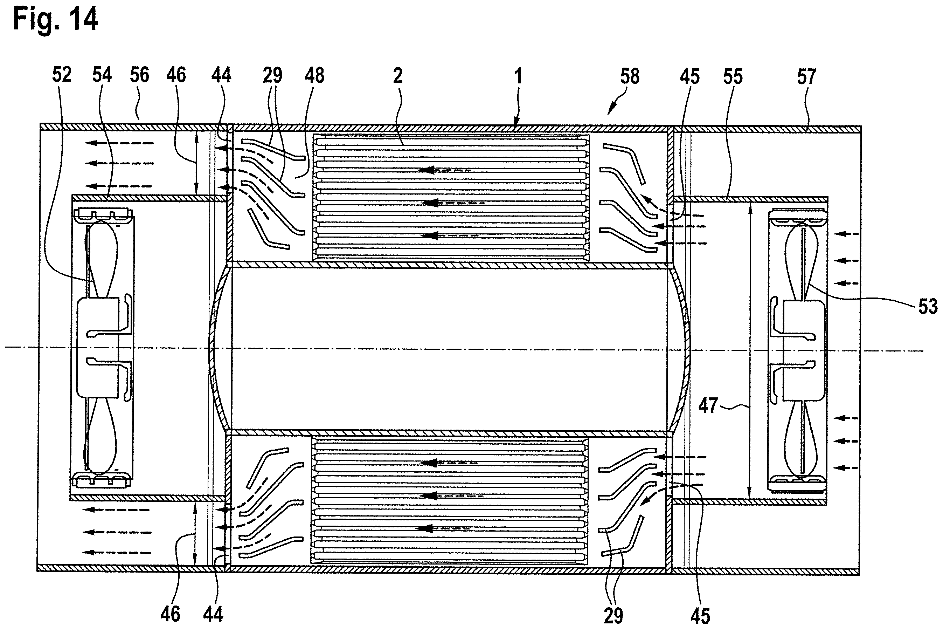

Anhand der Figur 9 soll nunmehr der Zusammenbau von den Wärmeübertragungselementbauteilen 60 und 61 erläutert werden. Dort ist erkennbar, dass die Endkanten der Abstandsstege 65 auf die aus der Figur 12 hervorgehende Vorderseite 68 des angrenzenden Wärmeübertragungselementbauteils 61 treten. Die Endkanten der Abstandsstege 64 (aufgrund der perspektivischen Darstellung ist in der Figur 9 nur ein Abstandssteg 64 erkennbar) treten beim Zusammenbau gegen die Rückseite 69 des dort angrenzenden Wärmeübertragungselementbauteils 61. Dementsprechend treten die Endkanten der Abstandsstege 24 bis 27 in den beiden Kreuzstromzonen 49 und 51 des ersten Wärmeübertragungselementbauteils 60 ebenfalls gegen die Rückseite 69 des zweiten Wärmeübertragungselementbauteils 61. Die Endkanten der Abstandsstege 24 bis 27 des zweiten Wärmeübertragungselementbauteils 61 treten gegen die Rückseite 70 des ersten Wärmeübertragungselementbauteils 60. Diese, vorstehend geschilderte Situation liegt bei allen, aneinandergereihten Wärmeübertragungselementbauteilen 60 und 61 vor und führt zu einem Wärmeübertrager 1, so wie er nachstehend insbesondere anhand der Figuren 13 und 14 erläutert wird.

Im Hinblick auf die Figur 10 ist jedoch noch anzumerken, dass aufgrund der Zickzackausgestaltung des ersten Wärmeübertragungselementbauteils 60 auf beiden Seiten der Ebene 63 jeweils ein Fluidführungsweg 48 ausgestaltet wird, d.h., ein derartiger, aus der Figur 10 hervorgehender Kreisringausschnittszylinder 6, also ein derartiges Wärmeübertragungselement 2 besitzt zwei Fluidführungswege 48. Die jeweilige Begrenzung der Umrissstruktur dieses aus der Figur 10 hervorgehenden Wärmeübertragungselements 2 ist mit gestrichelter Linie angedeutet und wird - gemäß der vorstehenden Ausführungen - durch gegenliegende Bereiche der angrenzenden Wärmeübertragungselementbauteile 61 gebildet. Diese Bereiche sind "gemeinsame Bereiche". Das Wärmeübertragungselement 2 der Figur 10 wird daher von dem Wärmeübertragungselementbauteil 60 und dem durch die doppelt gestrichelte Linie angedeutete Wärmeübertragungselementbauteil 61 gebildet.

Es ergibt sich folgende Situation, wobei die Figuren 13 und 14 - ebenso wie die Figuren 5 und 6 - ein lufttechnisches Gerät 58 zeigen, also den Wärmeübertrager 1 mit weiteren, angebauten Komponenten, nämlich den Ventilatoren 52 und 53, den Ringkragen 54 und 55 und den Strömungsrohren 56 und 57, wobei letztere auch von einem durchgehenden Rohr gebildet sein können.

Die Figur 13 verdeutlicht mit durchzogenen Pfeilen die (von links nach rechts erfolgende) Strömung eines ersten Fluids, das von dem Ventilator 52 angetrieben wird, wobei dieser das erste Fluid der Innenzone 47 des Wärmeübertragers 1 zuführt. Das erste, in die entsprechende Fluidöffnung 45 eintretende Fluid wird in der ersten Kreuzstromzone 49 aufgrund der entsprechend gestalteten Fluidstege 29 verteilt und gelangt dadurch in die Gegenstromzone 58 und von dort wird die Strömung des ersten Fluids in der zweiten Kreuzstromzone 51 mit einer Radialkomponente nach außen durch die Fluidöffnung 44 hindurch in die Außenzone 46 geleitet und tritt somit aus dem Ringraum zwischen dem Ringkragen 55 und dem Strömungsrohr 57 wieder aus. Die Figur 14 erläutert mit gestrichelten Pfeilen die (von rechts nach links erfolgende) Strömung eines zweiten Fluids, das mittels des Ventilators 53 dem Wärmeübertrager 1 zugeführt wird, und zwar der jeweiligen Fluidöffnung 45 in der Innenzone 47. Es ergeben sich entsprechend gleiche Strömungsverhältnisse wie bei der Figur 13 beschrieben, d.h., das zweite Fluid passiert den Gegenstrombereich 50 und wird dann im Kreuzstrombereich 49 nach außen geleitet und gelangt daher durch die Fluidöffnung 44 in die Außenzone 46. Da die einzelnen so gebildeten Fluidführungswege 48 über den Umfang des Wärmeübertragers 1 gesehen voneinander getrennt sind, erfolgt durch das Material der Wärmeübertragungselementbauteile 60, 61 hindurch ein Wärmeübergang, d.h., die beiden erwähnten Fluide erfahren einen Wärmeübergang.

Bei dem Wärmeübertragungselement 2 des Ausführungsbeispiels der Figuren 7 bis 14 stellt das Wärmeübertragungselementbauteil 61 eine erste Wärmeübertragungswand 43 dar, die einen Wärmeübergang zu einem benachbarten Wärmeübertragungselement 2 ermöglicht. Das Wärmeübertragungselementbauteil 60 des Wärmeübertragungselements 2 stellt eine zweite Wärmeübertragungswand 71 dar, die den ersten und den zweiten Fluidführungsweg 48 in diesem Wärmeübertragungselement 2 voneinander trennt.

Die vorstehenden Ausführungen und auch die nachstehend beschriebenen Ausführungsbeispiele verdeutlichen, dass das einzelne Wärmeübertragungselement 2 keilförmig ausgebildet ist. Es weist mindestens einen in axialer Richtung verlaufenden Fluidführungsweg 48 zum Durchströmen eines Fluids auf, wobei das Wärmeübertragungselement 2 aufgrund seiner keilförmigen Ausbildung eine keilförmige Querschnittsfläche aufweist, wobei die axiale Richtung, nämlich die vorstehend erwähnte Zylinderachse 5 oder die oder nachstehend erwähnte Kegelstumpfachse - rechtwinklig oder etwa rechtwinklig zu der keilförmigen Querschnittsfläche verläuft.

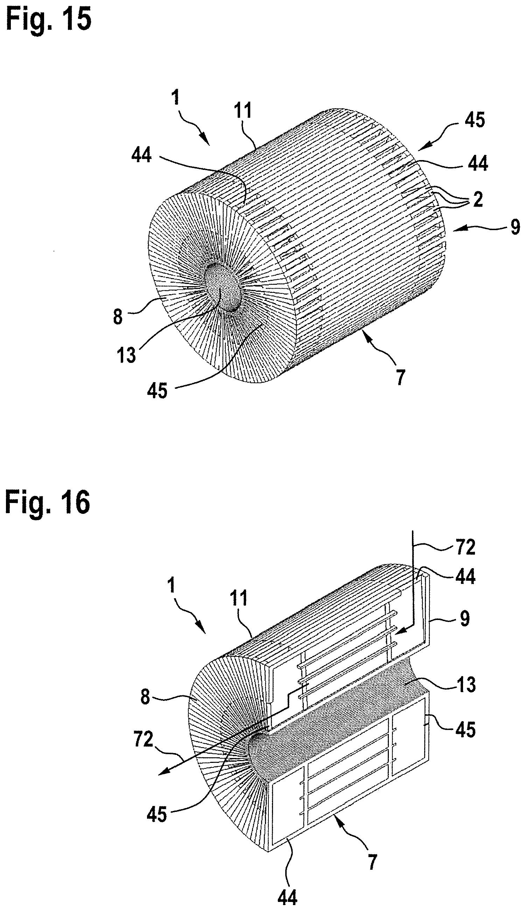

Die Figur 15 zeigt ein weiteres Ausführungsbeispiel eines Wärmeübertragers 1. Dieses Ausführungsbeispiel unterscheidet sich gegenüber dem Ausführungsbeispiel der Figur 1 insbesondere dadurch, dass die Fluidöffnungen 44 und 45 an anderer Stelle liegen. Betrachtet man eines der vielen aneinandergereihten Wärmeübertragungselemente 2, so wird deutlich, dass eine Fluidöffnungen 43 am Außenmantel 11 liegt und die dazugehörige Fluidöffnung 45 an der Stirnseite 8. Beim benachbart angrenzenden Wärmeübertragungselement 2 liegen entsprechende Verhältnisse vor, nämlich die Fluidöffnung 44 befindet sich ebenfalls am Außenmantel 11, jedoch im gegenüberliegenden Randbereich bezogen auf die zuvor erwähnte Fluidöffnung 44 des angrenzenden Wärmeübertragungselements 2 und die zugehörige Fluidöffnung 45 befindet sich an der Stirnseite 9. Die Verhältnisse gehen besonders deutlich aus der Figur 16 hervor, die einen Längsschnitt zeigt. Der mittlere Bereich des Wärmeübertragers der Figur 15 ist ähnlich oder genauso wie der entsprechende Bereich des Ausführungsbeispiels der Figur 1 ausgebildet. Der Verlauf der Strömung eines Fluids ist in der Figur 16 mittels Pfeilen 72 eingezeichnet. Natürlich kann - nach einem weiteren Ausführungsbeispiel - auch eine entsprechende Ausgestaltung gemäß Figur 15 und 16 vorliegen, wenn kein Kreisringzylinder vorliegt, sondern ein Kreiszylinder, ein Mehreckzylinder oder ein Mehreckhohlzylinder für die Umrissstruktur des gesamten Wärmeübertragers 1.

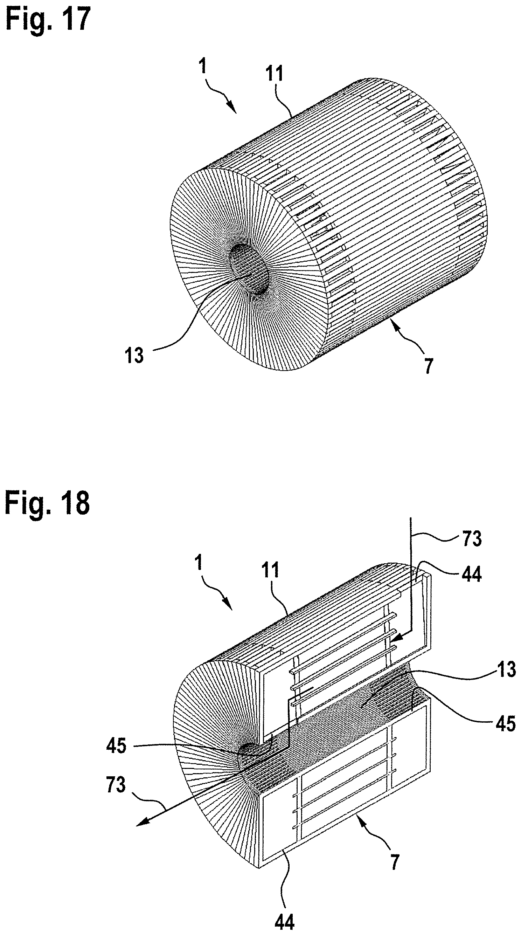

Die Figuren 17 und 18 entsprechen den Figuren 15 und 16, wobei jedoch wiederum die Lage der An- und Abströmung für die Fluide andersartig gestaltet ist, nämlich derart, dass Fluidöffnungen 44 an dem Außenmantel 11 und Fluidöffnungen 45 an dem Innenmantel 13 liegen, sodass sich der Strömungsverlauf für ein Fluid gemäß Pfeil 73 ergibt (siehe insbesondere Figur 18). Ansonsten wird auf die vorstehenden Ausführungen zu den Figuren 15 und 16 sowie Figur 1 Bezug genommen.

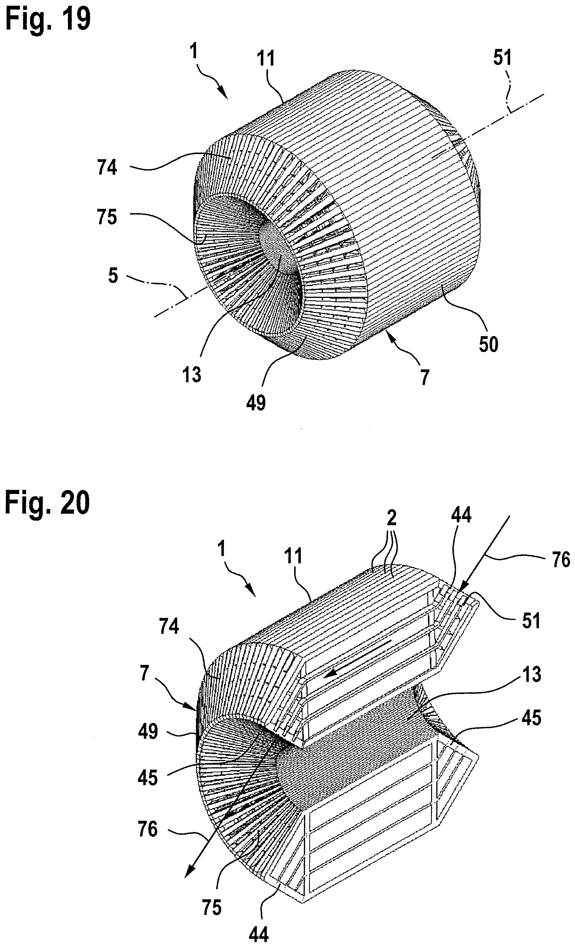

Das Ausführungsbeispiel der Figur 19 entspricht im Wesentlichen dem Ausführungsbeispiel der Figur 1, wobei jedoch nur die Gegenstromzone 50 zylindrisch ausgebildet ist. Anstelle der Gegenstromzone 50 kann auch eine Gleichstromzone vorliegen. Die beiden Kreuzstromzonen 49 und 51 sind - um die Zylinderachse 5 herumverlaufend dachförmig ausgebildet. Hierdurch ergeben sich keine ebenen Stirnseiten, sondern dachförmig (winklig) zueinander stehende Seiten 74 und 75, die mit entsprechenden Fluidöffnungen 44 und 45 versehen sind. Der Strömungsverlauf eines der keilförmigen Wärmeübertragungselemente 2 ist der Figur 20 entsprechend den dort dargestellten Pfeilen 76 entnehmbar. Ansonsten gelten die Ausführungen zu den Ausführungsbeispielen der Figuren 1, 15 bis 18 entsprechend zu dem Ausführungsbeispiel der Figuren 19 und 20.

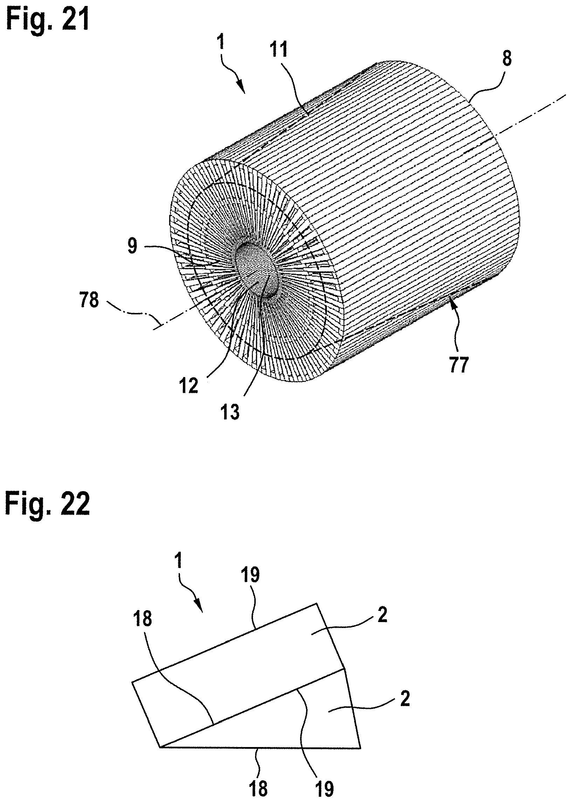

Die Figur 21 zeigt ein weiteres Ausführungsbeispiel eines Wärmeübertragers 1, dessen Umrissstruktur wie oder im Wesentlichen wie ein Kegelstumpf 77 ausgebildet ist. Der Kegelstumpf 77 besitzt eine Kegelstumpfachse 78. Die Figur 21 verdeutlicht nur die Umrissstruktur in gestrichelter Linie im Vergleich zu der mit durchgezogenen Linien dargestellten Umrissstruktur des Wärmeübertragers 1 der Figur 1. Dem Fachmann wird jedoch unmittelbar klar, wie dann im Einzelnen die Wärmeübertragungselemente 2 und - nach den verschiedenen vorstehenden Ausführungsbeispielen - die Lage der Fluidöffnungen 44 und 45 gestaltet sein müssen. Selbstverständlich kann bei der Kegelstumpfform der Figur 21 auch das Zentrum nicht hohl, sondern bis zur Kegelstumpfachse 78 verlaufend ausgebildet sein. Ferner kann das Innere 12, also der Hohlbereich, zylindrisch oder ebenfalls konisch, also kegelig, gestaltet sein.

Die Figur 22 zeigt einen Schnitt durch einen Wärmeübertrager 1, der ein keilförmiges Wärmeübertragungselement 2 aufweist, zu dem ein nicht keilförmiges Wärmeübertragungselement 2 benachbart liegt. Bei dem keilförmigen Wärmeübertragungselement 2 verlaufen die Elementseiten 18 und 19 winklig zueinander. Bei dem angrenzenden, nicht keilförmigen Wärmeübertragungselement 2 verlaufen deren Elementseiten 18 und 19 zum Beispiel parallel zueinander. Durch eine entsprechende Wahl, Anordnung und Anzahl entsprechend ausgestatteter Wärmeübertragungselemente 2 lässt sich somit ein gewünschter Wärmeübertrager 1 realisieren.

## Patentansprüche

1. Wärmeübertrager (1) für einen zwischen mindestens zwei Fluiden erfolgenden Wärmeübergang, mit mehreren Wärmeübertragungselementen (2), die jeweils mindestens einen Fluidführungsweg (48) für eine Durchleitung von mindestens einem der Fluide aufweisen, wobei der Wärmeübertrager (1) eine oder im Wesentlichen eine Zylinderform mit einer Zylinderachse (5) aufweist und die Wärmeübertragungselemente (2) um die Zylinderachse (5) herum zueinander benachbart angeordnet sind, wobei jedes der Wärmeübertragungselemente (2) oder jeweils mindestens ein Bereich von diesen eine Umrissstruktur wie ein oder im Wesentlichen wie ein:
- Dreieckzylinder oder
- Trapezzylinder oder
- Kreisausschnittszylinder oder
- Kreisringausschnittszylinder (6)
aufweist, wobei durch die benachbart zueinander angeordneten Wärmeübertragungselemente (2) der Wärmeübertrager (1) oder mindestens ein Bereich von diesem eine Umrissstruktur wie ein oder im Wesentlichen wie ein:
- Mehreckzylinder oder
- Mehreckhohlzylinder oder
- Kreiszylinder oder
- Kreisringzylinder (7)
aufweist, und wobei
jedes Wärmeübertragungselement (2) - in Richtung der Zylinderachse (5) betrachtet - drei Zonen aufweist, nämlich zwei Kreuzstromzonen (49,51), zwischen denen eine Gegenstromzone (50) oder eine Gleichstromzone liegt, und jedes Wärmeübertragungselement (2) eine erste Wärmeübertragungswand (43) aufweist, die für dieses Wärmeübertragungselement (2) und für das angrenzende Wärmeübertragungselement (2) eine gemeinsame Wärmeübertragungswand (43) bildet, und zwischen benachbarten ersten Wärmeübertragungswänden (43) mindestens ein Abstandssteg (24,25,26,27,28) angeordnet ist, der ein Fluidleitsteg (29) ist und der in mindestens einer der Kreuzstromzonen (49,51) schräg zur Zylinderachse (5) und in der Gegenstromzone (50) oder Gleichstromzone parallel zur Zylinderachse (5) verläuft, wobei der Wärmeübertrager (1) zwei, einander gegenüberliegende Stirnseiten (8,9) aufweist, die Fluidöffnungen (44,45) aufweisen, **dadurch gekennzeichnet, dass** an einer der Stirnseiten (8,9) die Fluidöffnungen (44,45) in einer Innenzone (47) Fluideintrittsöffnungen für ein erstes Fluid sind und dass an der anderen Stirnseite (9,8) die Fluidöffnungen (44,45) in einer sich um die Innenzone (47) herum erstreckenden Außenzone (46) Fluidaustrittsöffnungen für das erste Fluid sind, und dass an der anderen Stirnseite (9,8) die Fluidöffnungen (44,45) in der Innenzone (47) Fluideintrittsöffnungen für ein zweites Fluid sind und dass an der einen Stirnseite (8,9) die Fluidöffnungen (44,45) in der Außenzone (46) Fluidaustrittsöffnungen für das zweite Fluid sind.

2. Wärmeübertrager (1) für einen zwischen mindestens zwei Fluiden erfolgenden Wärmeübergang, mit mehreren Wärmeübertragungselementen (2), die jeweils mindestens einen Fluidführungsweg (48) für eine Durchleitung von mindestens einem der Fluide aufweisen, wobei der Wärmeübertrager (1) eine oder im Wesentlichen eine Kegelstumpfform mit einer Kegelstumpfachse aufweist und die Wärmeübertragungselemente (2) um die Kegelstumpfachse herum zueinander benachbart angeordnet sind, wobei jedes der Wärmeübertragungselemente (2) oder jeweils mindestens ein Bereich von diesen eine Umrissstruktur wie ein oder im Wesentlichen wie ein:
- Dreieckkegelstumpf oder
- Trapezkegelstumpf oder
- Kreisausschnittskegelstumpf oder
- Kreisringausschnittskegelstumpf
aufweist, wobei durch die benachbart zueinander angeordneten Wärmeübertragungselemente (2) der Wärmeübertrager (1) oder mindestens ein Bereich von diesem eine Umrissstruktur wie ein oder im Wesentlichen wie ein:
- Mehreckkegelstumpf oder
- Mehreckhohlkegelstumpf oder
- Kreiskegelstumpf oder
- Kreisringkegelstumpf
aufweist, und wobei
jedes Wärmeübertragungselement (2) - in Richtung der Kegelstumpfachse betrachtet - drei Zonen aufweist, nämlich zwei Kreuzstromzonen (49,51), zwischen denen eine Gegenstromzone (50) oder eine Gleichstromzone liegt, und jedes Wärmeübertragungselement (2) eine erste Wärmeübertragungswand (43) aufweist, die für dieses Wärmeübertragungselement (2) und für das angrenzende Wärmeübertragungselement (2) eine gemeinsame Wärmeübertragungswand (43) bildet, **dadurch gekennzeichnet, dass** zwischen benachbarten ersten Wärmeübertragungswänden (43) mindestens ein Abstandssteg (24,25,26,27,28) angeordnet ist, der ein Fluidleitsteg (29) ist und der in mindestens einer der Kreuzstromzonen (49,51) schräg zur Kegelstumpfachse und in der Gegenstromzone (50) oder Gleichstromzone parallel zur Kegelstumpfachse verläuft.

3. Wärmeübertrager nach einem der vorhergehenden Ansprüche, **dadurch gekennzeichnet, dass** der Fluidführungsweg (48) der Gegenstromzone (50) oder der Gleichstromzone parallel zur Zylinderachse (5) verläuft.

4. Wärmeübertrager nach einem der vorhergehenden Ansprüche, **dadurch gekennzeichnet, dass** der Fluidführungsweg der Gegenstromzone oder der Gleichstromzone parallel oder etwa parallel zur Kegelstumpfachse verläuft.

5. Wärmeübertrager nach einem der vorhergehenden Ansprüche, **dadurch gekennzeichnet, dass** der Fluidführungsweg (48) von mindestens einer der Kreuzstromzonen (49,51) schräg zur Zylinderachse (5) oder der Kegelstumpfachse verläuft.

6. Wärmeübertrager nach einem der vorhergehenden Ansprüche, **dadurch gekennzeichnet, dass** jedes Wärmeübertragungselement (2) einen ersten und einen zweiten Fluidführungsweg (48) für eine jeweilige Durchleitung von einem der Fluide aufweist.

7. Wärmeübertrager nach einem der vorhergehenden Ansprüche, **dadurch gekennzeichnet, dass** jedes Wärmeübertragungselement (2) eine zweite Wärmeübertragungswand (71) aufweist, die den ersten und den zweiten Fluidführungsweg (48) in diesem Wärmeübertragungselement (2) voneinander trennt.

8. Wärmeübertrager nach Anspruch 7, **dadurch gekennzeichnet, dass** die zweite Wärmeübertragungswand (71) derart ausgebildet ist, dass sie an sie angrenzende, erste Wärmeübertragungswände (43) zueinander auf Abstand hält.

9. Wärmeübertrager nach Anspruch 7 oder 8, **dadurch gekennzeichnet, dass** sich die erste und/oder die zweite Wärmeübertragungswand (43,71) von einer Außenseite/Außenmantel (11) des Wärmeübertragers (1) bis zu einer Innenseite/Innenmantel (13) oder einem Zentrum/Zylinderachse (5)/Kegelstumpfachse des Wärmeübertragers (1) erstreckt.

10. Wärmeübertrager nach einem der vorhergehenden Ansprüche, **dadurch gekennzeichnet, dass** der Wärmeübertrager (1) zwei, einander gegenüberliegende Stirnseiten (8,9) aufweist, die Fluidöffnungen (44,45), insbesondere Fluideintritts- und Fluidaustrittsöffnungen, aufweisen.

11. Wärmeübertrager nach einem der vorhergehenden Ansprüche, **dadurch gekennzeichnet, dass** der Wärmeübertrager (1) einen Außenmantel (11) und zwei einander gegenüberliegende Stirnseiten (8,9) aufweist, und dass mindestens eine der Stirnseiten (8,9) und der Außenmantel (11) die Fluidöffnungen (44,45), insbesondere Fluideintritts- und Fluidaustrittsöffnungen, aufweisen.

12. Wärmeübertrager nach einem der vorhergehenden Ansprüche, **dadurch gekennzeichnet, dass** der Wärmeübertrager (1) einen Außenmantel (11) und einen Innenmantel (13) aufweist und dass der Außenmantel (11) und der Innenmantel (13) die Fluidöffnungen (44,45), insbesondere Fluideintritts- und Fluidaustrittsöffnungen, aufweisen.

13. Wärmeübertrager nach einem der vorhergehenden Ansprüche, **dadurch gekennzeichnet, dass** mindestens eine der Stirnseiten (8,9) eine Innenzone (47) und eine sich um die Innenzone (47) herum erstreckende Außenzone (46) aufweist, wobei Fluidöffnungen (44,45) in der Innenzone (47) Fluideintrittsöffnungen und Fluidöffnungen (44,45) in der Außenzone (46) Fluidaustrittsöffnungen sind oder wobei Fluidöffnungen (44,45) in der Außenzone (46) Fluideintrittsöffnungen und Fluidöffnungen (44,45) in der Innenzone (47) Fluidaustrittsöffnungen sind.

14. Wärmeübertrager nach einem der vorhergehenden Ansprüche, **dadurch gekennzeichnet, dass** an einer der Stirnseiten (8,9) die Fluidöffnungen (44,45) in der Innenzone (47) Fluideintrittsöffnungen für ein erstes Fluid sind und dass an der anderen Stirnseite (9,8) die Fluidöffnungen (44,45) in der Außenzone (46) Fluidaustrittsöffnungen für das erste Fluid sind, und dass an der anderen Stirnseite (9,8) die Fluidöffnungen (44,45) in der Innenzone (47) Fluideintrittsöffnungen für ein zweites Fluid sind und dass an der einen Stirnseite (8,9) die Fluidöffnungen (44,45) in der Außenzone (46) Fluidaustrittsöffnungen für das zweite Fluid sind.

15. Lufttechnisches Gerät (58) mit einem Wärmeübertrager (1) nach einem der vorhergehenden Ansprüche, **gekennzeichnet durch** mindestens einen Ringkragen (54,55), der an mindestens einer der Stirnseiten (8,9) des Wärmeübertragers (1) derart angeordnet ist, dass er die dort gelegenen Fluideintrittsöffnungen von den dort gelegenen Fluidaustrittsöffnungen strömungstechnisch trennt, und durch mindestens einen Ventilator (52,53), der innerhalb des mindestens einen Ringkragens (54,55) angeordnet ist.

## Claims

1. Heat exchanger (1) for heat exchange between at least two fluids, comprising a plurality of heat exchange elements (2), each of which has at least one fluid-guiding path (48) for conducting at least one of the fluids through, wherein the heat exchanger (1) has a cylindrical shape or substantially a cylindrical shape having a cylinder axis (5), and the heat exchange elements (2) are arranged adjacent to each another around the cylinder axis (5), wherein each of the heat exchange elements (2) or at least a region of each of the heat exchange elements (2) forms an outline structure like a or substantially like a:
- triangular cylinder or
- trapezoidal cylinder or
- circle-sector cylinder or
- annulus-sector cylinder (6)
wherein, by means of the heat exchange elements (2) arranged adjacent to each other, the heat exchanger (1) or at least a region of the heat exchanger (1) has an outline structure like a or substantially like a:
- polygonal cylinder or
- polygonal hollow cylinder or
- circular cylinder or
- annular cylinder (7),
and wherein
each heat exchange element (2)-as seen looking in the direction of the cylinder axis (5)-comprises three zones, namely two cross-flow zones (49,51), between which a counterflow zone (50) or an identical-flow zone is located, and each heat exchange element (2) has a first heat exchange wall (43), which forms a common heat exchange wall (43) for this heat exchange element (2) and for the adjacent heat exchange element (2), and at least one spacer rib (24,25,26,27,28) is arranged between adjacent first heat exchange walls (43), said spacer rib (24,25,26,27,28) being a fluid-guiding rib (29) and running obliquely to the cylinder axis (5) in at least one of the cross-flow zones (49,51), and running parallel to the cylinder axis (5) in the counterflow zone (50) or identical-flow zone, wherein the heat exchanger (1) has two front sides (8,9) which are opposite one another and comprise fluid openings (44,45), **characterized in that** the fluid openings (44,45) in an inner zone (47) on one of the front sides (8,9) are fluid inlet openings for a first fluid, and that the fluid openings (44,45) in an outer zone (46), which extends around the inner zone (47), on the other front side (9,8) are fluid outlet openings for the first fluid, and that the fluid openings (44,45) in the inner zone (47) on the other front side (9,8) are fluid inlet openings for a second fluid, and that the fluid openings (44,45) in the outer zone (46) on the one front side (8,9) are fluid outlet openings for the second fluid.

2. Heat exchanger (1) for heat exchange between at least two fluids, comprising a plurality of heat exchange elements (2), each of which has at least one fluid-guiding path (48) for conducting at least one of the fluids through, wherein the heat exchanger (1) has a cone frustum shape or substantially a cone frustum shape having a cone frustum axis, and the heat exchange elements (2) are arranged adjacent to each another around the cone frustum axis, wherein each of the heat exchange elements (2) or at least a region of each of the heat exchange elements (2) forms an outline structure like a or substantially like a:
- triangular cone frustum or
- trapezoidal cone frustum or
- circle-sector cone frustum or
- annulus sector cone frustum
wherein, by means of the heat exchange elements (2) arranged adjacent to each other, the heat exchanger (1) or at least a region of the heat exchanger (1) has an outline structure like a or substantially like a:
- polygonal cone frustum or
- polygonal hollow cone frustum or
- circular cone frustum or
- annular cone frustum,
and wherein
each heat exchange element (2)-as seen looking in the direction of the cone frustum axis- comprises three zones, namely two cross-flow zones (49,51), between which a counterflow zone (50) or an identical-flow zone is located, and each heat exchange element (2) has a first heat exchange wall (43), which forms a common heat exchange wall (43) for this heat exchange element (2) and for the adjacent heat exchange element (2),
**characterized in that** at least one spacer rib (24,25,26,27,28) is arranged between adjacent first heat exchange walls (43), said spacer rib (24,25,26,27,28) being a fluid-guiding rib (29) and running obliquely to the cone frustum axis in at least one of the cross-flow zones (49,51), and running parallel to the cone frustum axis in the counterflow zone (50) or identical-flow zone.

3. Heat exchanger according to one of the previous claims, **characterized in that** the fluid-guiding path (48) of the counterflow zone (50) or the identical-flow zone runs parallel to the cylinder axis (5).

4. Heat exchanger according to one of the previous claims, **characterized in that** the fluid-guiding path of the counterflow zone or the identical-flow zone runs parallel or approximately parallel to the cone frustum axis.

5. Heat exchanger according to one of the previous claims, **characterized in that** the fluid-guiding path (48) of at least one of the cross-flow zones (49, 51) runs obliquely to the cylinder axis (5) or the cone frustum axis.

6. Heat exchanger according to one of the previous claims, **characterized in that** each heat exchange element (2) has a first and a second fluid-guiding path (48), each for conducting one of the fluids.

7. Heat exchanger according to one of the previous claims, **characterized in that** each heat exchange element (2) has a second heat exchange wall (71) which separates the first and the second fluid-guiding path (48) in this heat exchange element (2) from one another.

8. Heat exchanger according to claim 7, **characterized in that** the second heat exchange wall (71) is designed such that it keeps adjacent first heat exchange walls (43) at a distance from one another.

9. Heat exchanger according to claims 7 to 8, **characterized in that** the first and/or the second heat exchange wall (43, 71) extends from an outer side/outer jacket (11) of the heat exchanger (1) to an inner side/inner jacket (13) or a center/cylinder axis (5)/cone frustum axis of the heat exchanger (1).

10. Heat exchanger according to one of the previous claims, **characterized in that** the heat exchanger (1) has two front sides (8, 9), which are opposite one another and comprise fluid openings (44, 45), particularly fluid inlet and fluid outlet openings.

11. Heat exchanger according to one of the previous claims, **characterized in that** the heat exchanger (1) has an outer jacket (11) and two front sides (8, 9), which are opposite one another, and that at least one of the front sides (8, 9) and the outer jacket (11) comprise the fluid openings (44, 45), particularly fluid inlet and fluid outlet openings.

12. Heat exchanger according to one of the previous claims, **characterized in that** the heat exchanger (1) has an outer jacket (11) and an inner jacket (13), and that the outer jacket (11) and the inner jacket (13) comprise the fluid openings (44,45), particularly fluid inlet and fluid outlet openings.

13. Heat exchanger according to one of the previous claims, **characterized in that** at least one of the front sides (8,9) comprises an inner zone (47) and an outer zone (46) which extends around the inner zone (47), wherein fluid openings (44,45) in the inner zone (47) are fluid inlet openings, and fluid openings (44,45) in the outer zone (46) are fluid outlet openings, or wherein fluid openings (44,45) in the outer zone (46) are fluid inlet openings, and fluid openings (44,45) in the inner zone (47) are fluid outlet openings.

14. Heat exchanger according to one of the previous claims, **characterized in that** the fluid openings (44,45) in the inner zone (47) on one of the front sides (8,9) are fluid inlet openings for a first fluid, and that the fluid openings (44,45) in the outer zone (46) on the other front side (9,8) are fluid outlet openings for the first fluid, and that the fluid openings (44,45) in the inner zone (47) on the other front sides (9,8) are fluid inlet openings for a second fluid, and that the fluid openings (44,45) in the outer zone (46) on the one front side (8,9) are fluid outlet openings for the second fluid.

15. Air device (58) having a heat exchanger (1) according to one of the previous claims, **characterized by** at least one ring collar (54,55) which is arranged on at least one of the front sides (8,9) of the heat exchanger (1) such that it fluidically separates the fluid inlet openings from the fluid outlet openings located at said front side and having at least one fan (52,53), which is arranged within the at least one ring collar (54,55).

## Revendications

1. Echangeur de chaleur (1) pour un transfert de chaleur s'effectuant entre au moins deux fluides, avec plusieurs éléments d'échange de chaleur (2) qui présentent chacun au moins un trajet de guidage de fluide (48) pour un passage d'au moins un des fluides, dans lequel l'échangeur de chaleur (1) présente une forme cylindrique ou essentiellement une forme cylindrique avec un axe du cylindre (5) et les éléments d'échange de chaleur (2) sont disposés autour de l'axe du cylindre (5) de manière voisine les uns par rapport aux autres, dans lequel chacun des éléments d'échange de chaleur (2) ou à chaque fois au moins une région de ceux-ci présente une structure de contour comme un ou essentiellement comme un :
- cylindre triangulaire ou
- cylindre trapézoïdal ou
- cylindre de secteur circulaire ou
- cylindre de secteur d'anneau de cercle (6),
dans lequel l'échangeur de chaleur (1) ou au moins une région de celui-ci présente à travers les éléments d'échange de chaleur (2) disposés de manière voisine les uns par rapport aux autres une structure de contour comme un ou essentiellement comme un :
- cylindre polygonal ou
- cylindre creux polygonal ou
- cylindre circulaire ou
- cylindre d'anneau de cercle (7),
et dans lequel
chaque élément d'échange de chaleur (2) présente, considéré en direction de l'axe du cylindre (5), trois zones, à savoir deux zones de courant croisé (49, 51) entre lesquelles une zone de contre-courant (50) ou une zone de courant parallèle se situe, et chaque élément d'échange de chaleur (2) présente une première paroi de transfert de chaleur (43) qui forme pour cet élément d'échange de chaleur (2) et pour l'élément d'échange de chaleur adjacent (2) une paroi de transfert de chaleur commune (43), et au moins une traverse d'écartement (24, 25, 26, 27, 28) est disposée entre des premières parois de transfert de chaleur voisines (43), qui est une traverse de guidage de fluide (29) et qui s'étend dans au moins une des zones de courant croisé (49, 51) en biais vers l'axe du cylindre (5) et dans la zone de contre-courant (50) ou zone de courant parallèle parallèlement à l'axe du cylindre (5), dans lequel l'échangeur de chaleur (1) présente deux côtés frontaux (8, 9) opposés l'un à l'autre qui présentent des ouvertures de fluide (44, 45), **caractérisé en ce que** sur un des côtés frontaux (8, 9), les ouvertures de fluide (44, 45) dans une zone interne (47) sont des ouvertures d'entrée de fluide pour un premier fluide et que sur l'autre côté frontal (9, 8), les ouvertures de fluide (44, 45) dans une zone externe (46) s'étendant autour de la zone interne (47) sont des ouvertures de sortie de fluide pour le premier fluide, et que sur l'autre côté frontal (9, 8), les ouvertures de fluide (44, 45) dans la zone interne (47) sont des ouvertures d'entrée de fluide pour un second fluide et que sur le côté frontal en question (8, 9), les ouvertures de fluide (44, 45) dans la zone externe (46) sont des ouvertures de sortie de fluide pour le second fluide.

2. Echangeur de chaleur (1) pour un transfert de chaleur s'effectuant entre au moins deux fluides, avec plusieurs éléments d'échange de chaleur (2) qui présentent chacun au moins un trajet de guidage de fluide (48) pour un passage d'au moins un des fluides, dans lequel l'échangeur de chaleur (1) présente une forme tronconique ou essentiellement une forme tronconique avec un axe de cône tronqué et les éléments d'échange de chaleur (2) sont disposés autour de l'axe de cône tronqué de manière voisine les uns par rapport aux autres, dans lequel chacun des éléments d'échange de chaleur (2) ou à chaque fois au moins une région de ceux-ci présente une structure de contour comme un ou essentiellement comme un :
- cône tronqué triangulaire ou
- cône tronqué trapézoïdal ou
- cône tronqué de secteur circulaire ou
- cône tronqué de secteur d'anneau de cercle,
dans lequel l'échangeur de chaleur (1) ou au moins une région de celui-ci présente, en raison des éléments d'échange de chaleur (2) disposés de manière voisine les uns par rapport aux autres, une structure de contour comme un ou essentiellement comme un :
- cône tronqué polygonal ou
- cône tronqué creux polygonal ou
- cône tronqué circulaire ou
- cône tronqué d'anneau de cercle,
et dans lequel
chaque élément d'échange de chaleur (2) présente, considéré en direction de l'axe de cône tronqué, trois zones, à savoir deux zones de courant croisé (49, 51) entre lesquelles une zone de contre-courant (50) ou une zone de courant parallèle se situe, et chaque élément d'échange de chaleur (2) présente une première paroi de transfert de chaleur (43) qui forme pour cet élément d'échange de chaleur (2) et pour l'élément d'échange de chaleur adjacent (2) une paroi de transfert de chaleur commune (43), **caractérisé en ce qu'**au moins une traverse d'écartement (24, 25, 26, 27, 28) est disposée entre des premières parois de transfert de chaleur voisines (43), qui est une traverse de guidage de fluide (29) et qui s'étend dans au moins une des zones de courant croisé (49, 51) en biais vers l'axe de cône tronqué et dans la zone de contre-courant (50) ou zone de courant parallèle parallèlement à l'axe de cône tronqué.

3. Echangeur de chaleur selon une des revendications précédentes, **caractérisé en ce que** le trajet de guidage de fluide (48) de la zone de contre-courant (50) ou de la zone de courant parallèle s'étend parallèlement à l'axe du cylindre (5).

4. Echangeur de chaleur selon une des revendications précédentes, **caractérisé en ce que** le trajet de guidage de fluide de la zone de contre-courant ou de la zone de courant parallèle s'étend parallèlement ou approximativement parallèlement à l'axe de cône tronqué.

5. Echangeur de chaleur selon une des revendications précédentes, **caractérisé en ce que** le trajet de guidage de fluide (48) d'au moins une des zones de courant croisé (49, 51) s'étend en biais par rapport à l'axe du cylindre (5) ou l'axe de cône tronqué.

6. Echangeur de chaleur selon une des revendications précédentes, **caractérisé en ce que** chaque élément d'échange de chaleur (2) présente un premier et un second trajet de guidage de fluide (48) pour un passage respectif d'un des fluides.

7. Echangeur de chaleur selon une des revendications précédentes, **caractérisé en ce que** chaque élément d'échange de chaleur (2) présente une seconde paroi de transfert de chaleur (71) qui sépare le premier et le second trajet de guidage de fluide (48) dans cet élément d'échange de chaleur (2) l'un de l'autre.

8. Echangeur de chaleur selon la revendication 7, **caractérisé en ce que** la seconde paroi de transfert de chaleur (71) est réalisée de telle sorte qu'elle maintient à distance l'une par rapport à l'autre des premières parois de transfert de chaleur (43) adjacentes à elle.

9. Echangeur de chaleur selon la revendication 7 ou 8, **caractérisé en ce que** la première et/ou la seconde paroi de transfert de chaleur (43, 71) s'étend d'un côté externe/d'une enveloppe externe (11) du échangeur de chaleur (1) à un côté interne/une enveloppe interne (13) ou un centre/axe du cylindre (5)/axe de cône tronqué du échangeur de chaleur (1).

10. Echangeur de chaleur selon une des revendications précédentes, **caractérisé en ce que** l'échangeur de chaleur (1) présente deux côtés frontaux (8, 9) opposés l'un à l'autre qui présentent des ouvertures de fluide (44, 45), notamment ouvertures d'entrée de fluide et de sortie de fluide.

11. Echangeur de chaleur selon une des revendications précédentes, **caractérisé en ce que** l'échangeur de chaleur (1) présente une enveloppe externe (11) et deux côtés frontaux (8, 9) opposés l'un à l'autre, et qu'au moins un des côtés frontaux (8, 9) et l'enveloppe externe (11) présentent les ouvertures de fluide (44, 45), notamment ouvertures d'entrée de fluide et de sortie de fluide.

12. Echangeur de chaleur selon une des revendications précédentes, **caractérisé en ce que** l'échangeur de chaleur (1) présente une enveloppe externe (11) et une enveloppe interne (13), et que l'enveloppe externe (11) et l'enveloppe interne (13) présentent les ouvertures de fluide (44, 45), notamment ouvertures d'entrée de fluide et de sortie de fluide.

13. Echangeur de chaleur selon une des revendications précédentes, **caractérisé en ce qu'**au moins un des côtés frontaux (8, 9) présente une zone interne (47) et une zone externe (46) s'étendant autour de la zone interne (47), dans lequel des ouvertures de fluide (44, 45) dans la zone interne (47) sont des ouvertures d'entrée de fluide et des ouvertures de fluide (44, 45) dans la zone externe (46) sont des ouvertures de sortie de fluide ou dans lequel des ouvertures de fluide (44, 45) dans la zone externe (46) sont des ouvertures d'entrée de fluide et des ouvertures de fluide (44, 45) dans la zone interne (47) sont des ouvertures de sortie de fluide.

14. Echangeur de chaleur selon une des revendications précédentes, **caractérisé en ce que** sur un des côtés frontaux (8, 9), les ouvertures de fluide (44, 45) dans la zone interne (47) sont des ouvertures d'entrée de fluide pour un premier fluide et que sur l'autre côté frontal (9, 8), les ouvertures de fluide (44, 45) dans la zone externe (46) sont des ouvertures de sortie de fluide pour le premier fluide, et que sur l'autre côté frontal (9, 8), les ouvertures de fluide (44, 45) dans la zone interne (47) sont des ouvertures d'entrée de fluide pour un second fluide et que sur le côté frontal en question (8, 9), les ouvertures de fluide (44, 45) dans la zone externe (46) sont des ouvertures de sortie de fluide pour le second fluide.

15. Appareil aéraulique (58) avec un échangeur de chaleur (1) selon une des revendications précédentes, **caractérisé par** au moins un rebord annulaire (54, 55) qui est disposé sur au moins un des côtés frontaux (8, 9) du échangeur de chaleur (1) de telle sorte qu'il sépare fluidiquement des fluides les ouvertures d'entrée de fluide qui y sont situées des ouvertures de sortie de fluide qui y sont situées, et par au moins un ventilateur (52, 53) qui est disposé au sein de l'au moins un rebord annulaire (54, 55).
